(19) Europäisches Patentamt
European Patent Office
Office européen des brevets

(11) **EP 3 102 988 B1**

(12) **EUROPÄISCHE PATENTSCHRIFT**

(45) Veröffentlichungstag und Bekanntmachung des Hinweises auf die Patenterteilung:
**20.04.2022 Patentblatt 2022/16**

(21) Anmeldenummer: **15713831.4**

(22) Anmeldetag: **03.02.2015**

(51) Internationale Patentklassifikation (IPC):
*G05B 19/416* (2006.01)    *G05B 19/418* (2006.01)
*G05B 19/414* (2006.01)    *B65H 23/198* (2006.01)
*B65H 23/185* (2006.01)    *H02P 21/00* (2016.01)
*H02P 5/00* (2016.01)

(52) Gemeinsame Patentklassifikation (CPC):
**B65H 23/185; B65H 23/198; G05B 19/414;
G05B 19/416; G05B 19/4189; H02P 5/00;**
G05B 2219/2621; G05B 2219/41279; Y02P 90/02

(86) Internationale Anmeldenummer:
**PCT/DE2015/100047**

(87) Internationale Veröffentlichungsnummer:
**WO 2015/113562 (06.08.2015 Gazette 2015/31)**

(54) **ANTRIEBSSYSTEM FÜR FÖRDER-, EXTRUDER-, SCHUB-, ZUGEINRICHTUNGEN,
GLEICHLAUFANWENDUNGEN UND ZENTRUMSWICKLER**

DRIVE SYSTEM FOR CONVEYOR, EXTRUDER, THRUST AND TRACTION DEVICES,
SYNCHRONIZING APPLICATIONS AND CENTER WINDS

SYSTÈME D'ENTRAÎNEMENT DESTINÉ À DES DISPOSITIFS DE TRANSPORT, D'EXTRUSION,
DE POUSSÉE, DE TRACTION, À DES APPLICATIONS DE SYNCHRONISATION ET À DES
ENROULEURS AXIAUX

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **03.02.2014 DE 102014001249
10.07.2014 DE 102014010336**

(43) Veröffentlichungstag der Anmeldung:
**14.12.2016 Patentblatt 2016/50**

(73) Patentinhaber: **González-Villar, Juan, Carlos
41199 Mönchengladbach (DE)**

(72) Erfinder: **González-Villar, Juan, Carlos
41199 Mönchengladbach (DE)**

(56) Entgegenhaltungen:
**EP-A1- 1 953 053      EP-A2- 2 456 063
DE-A1-102008 040 132    DE-A1-102011 083 574
US-A1- 2006 205 553**

# EP 3 102 988 B1

**Beschreibung**

Die Erfindung betrifft ein Antriebssystem, ein Verfahren und die Verwendung eines Verfahrens zum Antreiben von Förder-, Extruder-, Schub-, Zugeinrichtungen, Gleichlaufanwendungen und Zentrumswicklern mit mindestens einer leistungsverzweigten Antriebseinheit, wobei die Leistungsverzweigung über eine Getriebestufe in der Antriebseinheit realisiert ist und die Antriebseinheit über ein Synchronisationssystem mit weiteren Antriebseinheiten koppelbar ist.

Fördereinrichtungen und Förderanlagen dienen zum Transport von Stoffen, Stückgütern, Schüttgütern etc. an den Ort einer Produktionsanlage, wo sie gebraucht und eingesetzt werden. Zu ihnen gehören zum Beispiel Transportbänder, Kettenförderer, Rollenförderer, Schneckenförderer etc.

Extrudereinrichtungen sind Fördergeräte, die nach dem Prinzip des Schneckenförderers dickflüssige bis feste Massen unter hohem Druck und hoher Temperatur gleichmäßig aus einer formgebenden Öffnung herauspressen. Extrudierbare Werkstoffe sind Tone und keramische Massen, Gummi und Kautschuk, thermoplastische Polymere (PVC, PE, PP, PET, PA etc.), Verbundwerkstoffe, thermoplastische Massen, teigförmige Lebens- und Futtermittel-Mischungen, Aluminium etc.

Schub- und Zugeinrichtungen dienen dazu, Endlosmaterialien nach (Abwickler) oder vor (Aufwickler) einem Bearbeitungs-, Verarbeitungs-, Veredelungs-, Umwickel- oder Ablängprozess dem Speicher zuzuführen / abzuführen. Bei den verschiedenen Materialien kann es sich um homogene Materialbahnen wie Papierbahnen, Folien, Bänder, Bleche, Gewebe, Vliese, Geflechte, Drähte, Seile, Kabel, Garne oder Fäden handeln. Das Material wird mit einer definierten, von der Materialbeschaffenheit, Materialdicke oder vom Materialdurchmesser abhängigen Zugkraft geschoben bzw. gezogen. Schub- und Zugeinrichtungen dienen auch zur Realisierung von Hub- und Pressvorgängen.

Bei einer Gleichlaufanwendung (Gleichlaufantrieb) arbeiten mehrere Antriebe mit synchroner Geschwindigkeit oder Winkellage. Einsatzgebiete für Gleichlaufantriebe sind z. B. der Transport von Warenbahnen in kontinuierlichen Fertigungsprozessen, Druckwerke in Druckmaschinen etc.

Jedes zu schiebende/ziehende/fördernde/pressende Material/Produkt stellt an den Antrieb unterschiedliche und zum Teil sehr hohe Anforderungen. So darf das Material/Produkt während des gesamten Förder-, Schub-, Zug- bzw. Pressvorgangs nicht beeinträchtigt werden. Die Baugröße des Motors einer Förder-, Extruder-, Schub- oder Zugeinrichtung bzw. einer Gleichlaufanwendung wird durch das Drehmoment und die Drehzahl bestimmt. Bei Förder-, Extruder-, Schub-, Zugeinrichtungen oder Gleichlaufanwendungen fällt die maximale Leistung bei maximalem Drehmoment und maximaler Geschwindigkeit an. Die zu installierende Typenleistung (Eckleistung) des Antriebssystems ist daher bei Förder-, Extruder-, Schub-, Zugeinrichtungen, Gleichlaufanwendungen im Teillastbetrieb deutlich größer als die Prozessleistung. Obwohl hohe Drehzahlen und hohe Drehmomente nicht immer gleichzeitig auftreten, muss der Antrieb beides erbringen können. In der Antriebstechnik spricht man bei Förder-, Extruder-, Schub-, Zugeinrichtungen oder Gleichlaufantrieben von einer Anwendung mit linear steigender Leistungskennlinie oder einer Anwendung mit Konstantmoment (in der Praxis kann die Leistungskennlinie auch hyperbolisch steigen). Es werden Elektromotoren mit einer hohen Antriebsleistung eingesetzt, die im Teillastbetrieb nur schlecht ausgenutzt werden kann.

Wickelantriebe dienen dazu, Endlosmaterialien vor (Abwickler) oder nach (Aufwickler) einem Bearbeitungs-, Verarbeitungs-, Veredelungs-, Umwickel-, oder Ablängprozess zu speichern. Mathematisch gesehen handelt es sich bei einem aufgewickelten Wickelgut um eine archimedische Spirale. Das aufgewickelte Material wird in den verschiedenen Anwendungsbereichen und Branchen unterschiedlich bezeichnet, beispielsweise als Wickelballen, Rolle, Coil, Haspel, Spule, Baum oder als Kaule. Bei den verschiedenen Materialien kann es sich um homogene Materialbahnen wie Papierbahnen, Folien, Bänder, Bleche, Gewebe, Geflechte, Drähte, Seile, Kabel, Garne oder Fäden handeln. Sie haben eine hohe Varianz bei folgenden Eigenschaften: Elastizität, Oberfläche, Härte, Biegekräfte, Zugfestigkeit, Breite, Dicke, Dickentoleranz, Dichte, Flächengewicht und Querschnittsprofil. Das Material wird mit einer definierten, von der Materialbeschaffenheit, Materialdicke oder vom Materialdurchmesser (Drähte, Kabel und Seile) abhängigen Zugkraft aufgewickelt bzw. abgewickelt. Jedes zu wickelnde Material stellt an den Wickelantrieb unterschiedliche und zum Teil sehr hohe Anforderungen. So darf das Material während des gesamten Wickelvorgangs nicht beeinträchtigt werden. Erschwerend kommt hinzu, dass das Gewicht und die Geometrie des Wickelgutes mit wachsendem / abnehmenden Durchmesser kontinuierlich größer / kleiner werden und die Lager-Reibkräfte sowie das Trägheitsmoment des Wickelkörpers stetig zunehmen / abnehmen.

Abhängig von den Materialien und abgestimmt auf die zu wickelnden Materialien werden unterschiedliche Wickelmaschinen und damit Wickelprinzipien eingesetzt. Es existieren zwei Grundprinzipien: Zentrumswickler bzw. Umfangswickler oder Kontaktwickler. Der Zentrumswickler ist der am häufigsten eingesetzte Maschinentyp. Beim Zentrumswickler wirkt der Antrieb auf das Zentrum des zu wickelnden Materials. Das Drehmoment des Motors wird über den Antriebsstrang, die Antriebswelle sowie über eine Spule, eine Haspel, eine Hülse oder einen Dorn auf die Materialbahn übertragen. Diese gibt das Drehmoment von den jeweils inneren Lagen auf die äußeren Lagen weiter. Ein technologischer Vorteil liegt darin, dass die Oberfläche der Warenbahn nicht von Walzen berührt wird, wie das beim Umfangs- oder Kontaktwickler der Fall ist.

Die Baugröße des Motors eines Zentrumswicklers wird durch sein Drehmoment bestimmt. Beim Zentrumswickler fällt das maximale Drehmoment bei dem größten Wickeldurchmesser an und damit bei der geringsten Drehzahl. Die zu installierende Typenleistung (Eckleistung) des Antriebssystems ist daher bei Zentrumswicklern deutlich größer als die Prozessleistung. Obwohl hohe Drehzahlen und hohe Drehmomente nicht gleichzeitig auftreten, muss der Antrieb beide erbringen können, in der Antriebstechnik spricht man hier von einer Anwendung mit Konstantleistungskurve bzw. von einer Anwendung mit linear-reziprok abnehmender Lastmomentkennlinie. Es werden Elektromotoren mit einer hohen Antriebsleistung eingesetzt, die nur schlecht ausgenutzt werden können. Bei großen Durchmessern und hohen Materialbreiten werden vor diesem Hintergrund Umfangs- oder Kontaktwickler bevorzugt, die aber den Nachteil der Oberflächenberührung des Wickelgutes mit sich bringen.

Förder-, Extruder-, Schub- und Zugeinrichtungen, Gleichlaufanwendungen und Zentrumswickler sind - nach dem Stand der Technik - mit definierten Ausbringungen und Geschwindigkeiten auf maximale Betriebszustände ausgelegt ($F_{max}$, $v_{max}$, $a_{max}$, $T_{max}$, $n_{max}$, $\alpha_{max}$, $m_{max}$, $Q_{max}$, $J_{max}$). Die dynamischen Reserven eines Umrichters reichen in den meisten Fällen aus, den Antrieb auch in Notsituationen abzubremsen. Bei sehr hohen Drehmomenten und sehr kurzen Bremszeiten kann es allerdings auch erforderlich sein, dass das Bremsmoment die relevante Größe für die Auslegung wird. Bei Förder-, Extruder-, Schub-, Zugeinrichtungen sowie Gleichlaufanwendungen mit intermittierenden Betriebsarten bestimmt das dynamische Antriebsdrehmoment die Dimensionierung. Bei dicker zu schiebenden / zu ziehenden Warenbahnen (zum Beispiel bei Blechen, Seilen) ist zusätzlich das Biegemoment für die Umformung zu berücksichtigen.

EP 2 456 063 A2 offenbart ein Verfahren und eine Maschine mit mehreren regelbaren elektrischen Antrieben, deren abgegebene oder aufgenommene mechanische Leistung unabhängig voneinander derart geregelt wird, um den Energieverbrauch bzw. den Leistungsbedarf zu regeln.

US 2006/205 553 A1 offenbart ein Planetengetriebe zum Einsatz bei elektrischen Antrieben.

EP 1 953 053 A1 offenbart ein Brems-System mit mehreren elektrischen Antrieben, die im Bereich der Feldschwächung betrieben werden, um eine Bremswirkung zu erzielen.

Der Erfindung liegt die Aufgabe zugrunde, ein energieeffizientes Antriebssystem für Förder-, Extruder-, Schub-, Zugeinrichtungen, Gleichlaufanwendungen und Zentrumswickler zu schaffen, bei dem in kostengünstiger, modular aufgebauter, wartungsfreier Bauweise sowie mit hoher Präzision, Dynamik und Zuverlässigkeit, ein Betrieb im optimalen Wirkungsgradbereich des Motors erzielt wird, der auch den störungsfreien Betrieb des Getriebes und des gesamten Getriebestrangs bei ebenso hoher Produkt-, Parameter- und Prozess-Varianz gewährleistet.

Diese Aufgabe wird erfindungsgemäß durch ein Antriebssystem gemäß Anspruch 1 und ein Verfahren gemäß Anspruch 11 gelöst.

Dabei sind weiterhin besonders bevorzugt alle Antriebseinheiten energetisch verknüpft und können einzeln und/oder gemeinsam motorisch und/oder generatorisch arbeiten, wobei der Energieausgleich in einem dafür vorgesehenen Spannungszwischenkreis mit integriertem Bremschopper und Bremswiderstand erfolgt, und wobei die Antriebseinheiten Elektromotoren aufweisen, die wenigstens zeitweise einzeln und/oder gemeinsam im Bereich der Feldschwächung betrieben werden.

Durch den gemeinsamen Zwischenkreis und die gezielte Anwendung des Feldschwächbereichs (neben dem "klassischen" Ankerstellbereich") bei höheren Drehzahlanforderungen können die Motoren über weite Anforderungsbereiche mit höher Effizienz betrieben werden und können auch kleiner dimensioniert werden als bei vergleichbaren Anforderungen.

Bevorzugt sind die mechanischen Leistungspfade mit unterschiedlichen Übersetzungsverhältnissen ausgelegt, bevorzugt jeweils mit um den Faktor von etwa 2,0 abweichenden Übersetzungsverhältnissen. Mit einem derartigen Übersetzungsverhältnisfaktor lassen sich die optimalen Effizienzbereiche der einzelnen Motoren besonders vorteilhaft ausnutzen.

Energetisch besonders günstig ist es, wenn in niedrigeren Drehzahl- oder Momentbereichen nicht alle Antriebseinheiten eines Antriebsstrangs aktiviert sein müssen. Hierzu kann vorgesehen sein, dass wenigstens einer, vorzugsweise alle mechanischen Leistungspfade eines Antriebsstranges selektiv mechanisch und/oder elektrisch vorzugsweise in beide Drehrichtungen festsetzbar sind.

Um die Übergänge zwischen verschiedenen Betriebsmodi zu dämpfen, kann vorgesehen sein, dass wenigstens eine Ausgangswelle einer Antriebseinheit ein Schwungrad zur Dämpfung von Drehmomentstößen aufweist, wobei das Schwungrad als Lüfterrad mit vergrößertem Trägheitsmoment ausgebildet sein kann.

Mit der Erfindung wird ein energieeffizientes Antriebssystem zum Betreiben einer Förder-, Extruder-, Schub-, Zugeinrichtung, Gleichlaufanwendung oder eines Zentrumswicklers mit mindestens einer leistungsverzweigten Antriebseinheit, wie beispielsweise einem Getriebestrang geschaffen. Über eine Getriebestufe kann eine Leistungsverzweigung erfolgen. Dabei kann die Getriebestufe als Zahnriemen- oder Zahnkettentrieb ausgestaltet sein, an der sich abtriebsseitig ein außen am Gehäuse mit Wälzlagern gelagertes und optional getriebenes, luftgekühltes Dreiwellen-Planetengetriebe befindet. Dieses Getriebe kann mit mehreren Antriebseinheiten versehen sein, die jedem Leistungspfad einzeln zugeordnet sind, wobei die Antriebseinheiten durch ein gemeinsames elektronisches Synchronisationssystem zeitbezogen, wegbezogen und/oder winkelbezogen und/oder drehzahlbezogen und/oder beschleunigungsbezogen und/oder verzögerungsbezogen und/oder drehmomentbezogen miteinander gekoppelt sind.

Von Vorteil ist, wenn die mechanischen Leistungspfade mit unterschiedlichen Übersetzungsverhältnissen ausgelegt werden, wobei ein Übersetzungsunterschied von ca. 2 das Optimum darstellt. Eine beispielsweise Dimensionierung wäre: Leistungspfad 1 mit i=4 und Leistungspfad 2 mit i=8 oder umgekehrt: Leistungspfad 1 mit i=8 und Leistungspfad 2 mit i=4.

Der Vorteil des erfindungsgemäßen Antriebssystems besteht darin, dass stets im optimalen Wirkungsgradbereich des/der Motors/Motoren gearbeitet wird, wobei der optimale Wirkungsgradbereich des Motors bei 0,75 ± 0,15 x Nenndrehzahl und 0,75 ± 0,15 x Nennmoment liegt. Hinzu kommt, dass Nennverluste und Leerlaufverluste des/der antreibenden Motors/Motoren - gegenüber dem Stand der Technik - um ein Vielfaches reduziert werden. Ein weiterer Vorteil liegt darin, dass alle am Antrieb beteiligten mechanischen Getriebestränge im optimalen Wirkungsgradbereich betrieben werden können. Das Leerlaufdrehmoment des mechanischen Antriebes bzw. der einzelnen Getriebestränge wird ebenfalls - gegenüber dem Stand der Technik - um ein Vielfaches reduziert.

Weiter ist vorgesehen, ein Synchronisationssystem und Kommunikationsmittel zum Austausch zeit-, weg- und/oder winkelbezogener und/oder drehzahlbezogener und/oder beschleunigungsbezogener und/oder verzögerungsbezogener und/oder drehmomentbezogener Informationen bereitzustellen. Diese Informationen umfassen insbesondere Soll- und Istwerte für eine Regelung der Antriebseinheiten. Dabei verfügt das Synchronisationssystem über zugeordnete Schnittstellen, mit denen die Informationen empfangen und aufbereitet sowie IstwertInformationen gesendet werden können. Die Kommunikationsmittel sind mit einem Sensor-Aktor-Bussystem ausgestattet, nachfolgend "Antriebsbussystem" genannt. Hierfür sind Schnittstellen für Bus-Ringstrukturen zur integrierten Echtzeit-Kommunikation in der Mess-, Steuerungs- und Regelungstechnik bekannt, wie beispielsweise ein SERCOS-Interface. Um den Anforderungen an zeitlich hohe Präzision und Schnelligkeit zu genügen, sind Bussysteme vorzusehen, die auf definierte Arbeitstakte synchronisiert sind und ein sogenanntes taktsynchrones Betriebsverhalten gewährleisten. Die Verwendung einer seriellen Busstruktur hilft, den Verdrahtungsaufwand zu reduzieren. Außerdem lässt sich die Einsparung - angesichts der hohen Bit-Übertragungsraten, die heutzutage mit Lichtwellenleitern und geschirmten Datenkabeln möglich sind - entsprechend den Dynamikvorgaben bewerkstelligen. Bei der Ringstruktur kann einer der Busteilnehmer die Rolle des Busmasters übernehmen, beispielsweise ein mit entsprechender Schnittstelle ausgestatteter Drehgeber oder eine ebensolche ausgestattete Antriebseinheit, der/die dann den Arbeitstakt vorgibt, auf den sich die anderen Antriebseinheiten synchronisieren können.

Synchronisationssysteme sind in der Mess-, Steuerungs- und Regelungstechnik allgemein bekannt. Im Rahmen der Erfindung ist unter "Synchronisationssystem" weniger eine Hardwareeinheit als vielmehr ein Software-Modul zu verstehen, das teilweise auf der Hardware des Antriebsbusses und teilweise auf der Hardware der Antriebseinheiten abläuft, insbesondere im Zusammenhang mit deren Schnittstellen zu den Kommunikationsmitteln bzw. zu dem Bussystem. Damit von der zentralen Leitsteuerung einer größeren Produktionsanlage aus auf den Förder-, Extruder- Schub-, Zugeinrichtungs-, Gleichlaufantrieb oder Zentrumswickler zugegriffen werden kann, ist vorgesehen, dass die Antriebseinheiten der Förder-, Extruder-, Schub-, Zugeinrichtung, der Gleichlaufanwendung oder des Zentrumswicklers zusätzlich mit einem Feldbussystem verbunden sind. Dieses ist im Rahmen einer geschichteten Netzwerk-Architektur und einer computergestützten Produktion auf einer höheren Ebene angesiedelt als das Synchronisationssystem bzw. dessen Antriebsbus.

Wichtige periphere Einrichtungen von Extrusions-, Schub- und Zugeinrichtungen oder Gleichlaufanwendungen sind Abwickeleinrichtungen, Aufwickeleinrichtungen, Tänzereinheiten, Zuführeinrichtungen, Schneidvorrichtungen sowie die Verlege- oder Changier-Einrichtung beim Einschub und Abzug von Kabeln, Seilen, schmalen Bändern, Folien, Blechen, Drähten und Textilien. So können auch eine Schneidvorrichtung oder eine Verlege- oder Changier-Einrichtung nahezu winkelsynchron zum Schub- und Zugvorgang angetrieben werden. Mit dem Synchronisationssystem können gegebenenfalls auch mit dessen Kommunikationsmitteln und/oder dessen Antriebsbussystem weitere Antriebseinheiten gekoppelt sein, die der Abwickel- und/oder Aufwickeleinrichtung und/oder der Tänzereinrichtung, und/oder der Schneidvorrichtung und/oder der Zuführeinrichtung und/oder der Verlege- oder Changier-Einrichtung einer Produktionsanlage zugeordnet sind.

Ferner kann erfindungsgemäß die Antriebswelle der Förder-, Extruder-, Schub- und Zugeinrichtung, der Gleichlaufanwendung oder des Zentrumswicklers mittels eines gekoppelten Drehgebers eine reale Leitdrehachse erzeugen bzw., es wird im Synchronisationssystem eine den Antriebseinheiten gemeinsam zugeordnete virtuelle Leitdrehachse generiert. Dies kann entweder in einem der Antriebseinheiten selbst oder in einem gesonderten Rechner erfolgen, der kommunikationstechnisch mit Rechnerschnittstellen der Antriebseinheiten verbunden ist. Mit diesem Konzept können die einzelnen Antriebseinheiten die Antriebswelle der Förder-, Extruder- Schub- und Zugeinrichtung, Gleichlaufanwendung oder des Zentrumswicklers nach rechnerisch ermittelten Sollwerten, nämlich nach "Leitdrehachswerten", antreiben oder einem real ermittelten Istwert folgen. Dies kann gemäß nachstehender Beziehung erfolgen:

$$n_{\text{Antriebswelle - Erforderlich}} = \left| n_{\text{Leistungspfad-Getriebestrang 1}} \right| + \left| n_{\text{Leistungspfad-Getriebestrang 2}} \right|$$

Die Leitdrehachs- bzw. Sollwerte für die einzelnen Antriebseinheiten der Extrudereinrichtung sind prozessabhängig und werden vorgegeben, die Leitdrehachs- bzw. Sollwerte für die einzelnen Antriebseinheiten der Förder-, Schub-, Zugeinrichtungen oder der Gleichlaufanwendung oder für den Zentrumswickler werden zweckmäßigerweise jeweils aus einem Soll- oder Istwert der Geschwindigkeit einer Förderbahn/Ware gemäß nachstehender Beziehung gewonnen:

$$n_{\text{Extruder - Erforderlich}} = f\,(\text{Extrusionsprozess})$$

$$n_{\text{Förder - Erforderlich}} = v_{\text{Förderbahn - Ist}} / (\varnothing d_{\text{Antriebswelle - Wirk}} \times \pi)$$

$$n_{\text{Schub-, Zug - Erforderlich}} = v_{\text{Ware - Ist}} / (\varnothing d_{\text{Antriebswelle - Wirk}} \times \pi)$$

$$n_{\text{Gleichlauf - Erforderlich}} = v_{\text{Ware - Ist}} / (\varnothing d_{\text{Antriebswelle - Wirk}} \times \pi)$$

$$n_{\text{Wickelkörper – Erforderlich}} = v_{\text{Warenbahn - Ist}} / (\varnothing d_{\text{Wickelkörper - Ist}} \times \pi)$$

Die kommunikationstechnische Übermittlung dieser Werte an die Antriebseinheiten kann der oben genannte, insbesondere seriell digitale Antriebsbus mit zeitlich taktsynchronem Verhalten übernehmen. Eine Vereinfachung ergibt sich, wenn das Antriebsbussystem primär als reiner Datenbus ausgeführt ist.

Weiterhin ist erfindungsgemäß vorgesehen, dass alle Antriebe energetisch verknüpft sind und einzeln und/oder gemeinsam motorisch und/oder generatorisch arbeiten können (4Q-Betrieb). Der Energieausgleich erfolgt in einem dafür vorgesehenen Spannungszwischenkreis mit integriertem Bremschopper und Bremswiderstand. Dies kann gemäß nachstehender Beziehung erfolgen:

$$T_{\text{Erforderlich}} = \left| T_{\text{Leistungspfad-Getriebestrang 1}} \right| + \left| T_{\text{Leistungspfad-Getriebestrang 2}} \right|$$

$$P_{\text{Erforderlich}} = \left| P_{\text{Leistungspfad-Getriebestrang 1}} \right| + \left| P_{\text{Leistungspfad-Getriebestrang 2}} \right|$$

Um den Anforderungen an hohe Präzision, Schnelligkeit, Kompaktheit und Energieeffizienz zu genügen, sind permanenterregte Drehstrom-Synchron-Servomotoren oder Synchron-Reluktanzmotoren vorgesehen. Diese haben gegenüber den fremderregten Drehstrom-Asynchron-Servomotoren, Drehstrom-Asynchronmotoren oder Gleichstrommotoren aus energetischer Sicht deutliche Vorteile, da kein Magnetisierungsstrom (Blindstrom für die Fremderregung des Rotors) erforderlich ist und ein Fremdlüfter zum Kühlen des Motorkörpers entfallen kann.

Vorteilhafterwiese sind zum Erweitern des nutzbaren Motor-Drehzahlbereiches alle Antriebe einzeln und/oder gemeinsam im Bereich der Feldschwächung betreibbar.

Ein weiterer Vorteil der Erfindung - insbesondere im Falle mehrerer synchronisierter Antriebsstränge - besteht darin, dass aufgrund der besonders flexiblen Ansteuerung in vielen Fällen Motoren, Getriebe und Umrichter gleichen Typs für verschiedenste Antriebsaufgaben verwendet werden können, wodurch eine gewisse Standardisierung mit Kosteneffekten erzielt werden kann.

Die Erfindung wird anhand der nachfolgen Ausführungsbeispiele nochmals eingehend erläutert. Es zeigen:

Figur 1     ein Blockschema des gesamten mechanischen Antriebsstrangs für eine Wickelanwendung (Anwendung mit Konstantleistungskurve);

Figur 2     eine Konstantleistungskurve einer Wickelanwendung (Konstantleistungskurve) gemäß dem Stand der Technik;

Figur 3     ein Blockschema für die Kommunikation und Regelung gemäß der Erfindung (Konstantleistungskurve);

Figur 4     Mathematische Funktion einer Wickelanwendung (Konstantleistungskurve) und Ausführungsbeispiel der Erfindung;

Figur 5        ein Block-Schema des gesamten mechanischen Antriebsstrangs bei linear oder hyperbolisch steigende Leistungskennlinie;

Figur 6        eine linear oder hyperbolisch ansteigende Leistungskennlinie gemäß dem Stand der Technik;

Figur 7        ein Blockschema für die Kommunikation und Regelung der Erfindung (linear oder hyperbolisch ansteigende Leistungskennlinie);

Figur 8        eine mathematische Funktion zur Anwendung mit linear oder hyperbolisch ansteigender Leistungskennlinie gemäß einem Ausführungsbeispiel der Erfindung;

Figur 9        ein Blockschema für die Kommunikation und Regelung der Erfindung mittels einer Drehmoment-Ausgleichsregelung (Konstantleistungskurve, linear oder hyperbolisch ansteigende Leistungskennlinie);

Figur 10       ein Block-Schema eines Gesamtsystems mit mechanisch über Planetengetriebe leistungsverzweigte, über ein elektronisches Synchronisationssystem vernetzte und energetisch über ein Spannungszwischenkreis verknüpfte Antriebssysteme;

Figur 11       eine Gleichungsmatrix des über ein Planetengetriebe leistungsverzweigten Antriebssystems mit drei Motoren in Abhängigkeit von Ankerstellbereich, Feldschwächbereich, Drehmoment, Drehzahl und Leistung;

Figur 12       eine Wirkungsgradkennlinienschar eines Motors in Abhängigkeit von Last (Drehmoment) und Drehzahl, und

Figur 13       eine Wirkungsgradkennlinienschar eines Getriebes in Abhängigkeit von Last (Drehmoment) und Drehzahl.

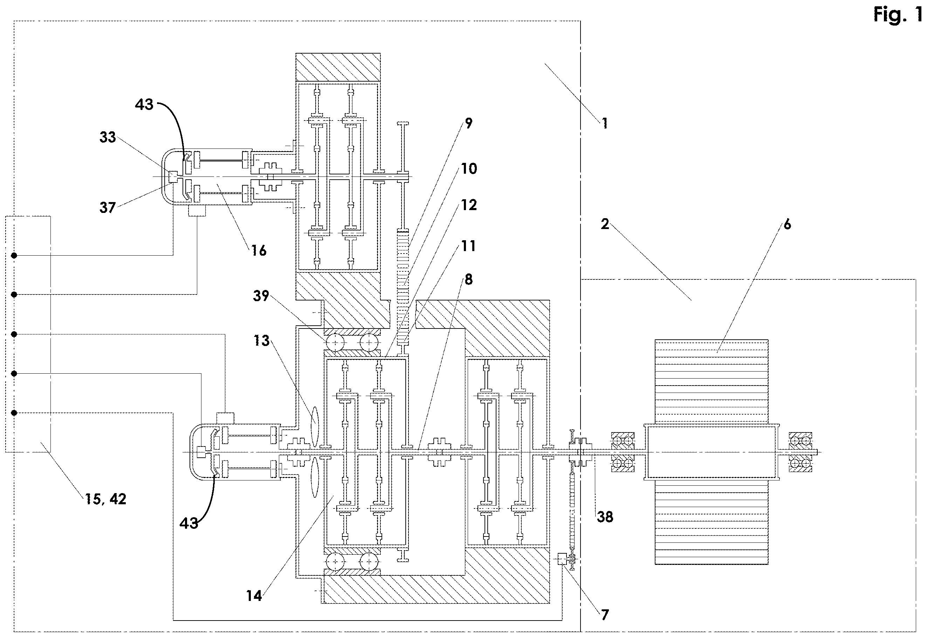

**Figur 1** zeigt ein Blockschema des gesamten mechanischen Antriebsstrangs einer für Wickelanwendungen (Konstantleistungskurve) ausgelegten Ausführungsform der vorliegenden Erfindung. An eine Antriebswelle **(38)** des Wickelkörpers **(6)** ist ein leistungsverzweigter Antriebsstrang **(8)** gekoppelt. Die Leistungsverzweigung wird über eine Getriebestufe **(9)** im Antriebsstrang **(8)** realisiert, die als Zahnriemen- oder Zahnkettentrieb **(10)** ausgeführt ist. Abtriebsseitig befindet sich ein außen am Gehäuse **(12)** mit Wälzlagern **(39)** gelagertes und über ein Gebläse **(13)** luftgekühltes Dreiwellen-Planetengetriebe **(14),** welches mit mehreren Antriebseinheiten **(15, 42)** gekoppelt ist, die jedem Leistungspfad einzeln zugeordnet sind. Jeder Leistungspfad ist von einem Drehstrom-Synchron-Servomotor **(16)** mit Resolver oder Encoder **(33)** angetrieben. Jede Antriebseinheit **(15, 42)** wird von einem Wechselrichter **(17)** mit einem darin eingebautem Mikroprozessor **(18)** angesteuert, kontrolliert bzw. geregelt. Letzterer besitzt Schnittstellen sowohl zu einem Antriebsbus **(19)** auf Aktor/Sensor-Ebene als auch zu einem Feldbus **(20)** auf der nächsthöheren Ebene einer geschichteten Netzwerk-Architektur. Alle Wechselrichter **(17)** sind an den beiden Bussystemen **(19, 20)** vorzugsweise mit Parallelverhalten angekoppelt.

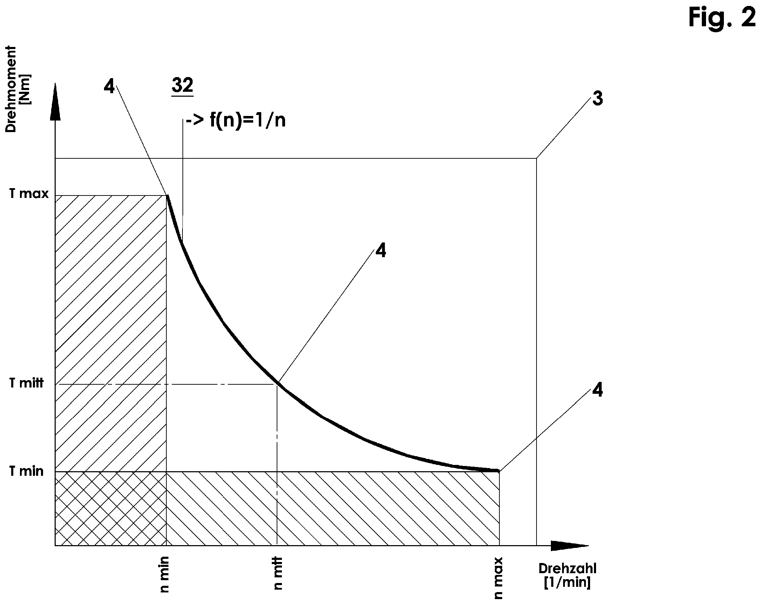

**Figur 2** zeigt eine typische Konstantleistungskurve **(32)** für Wickelanwendungen und die installierte Eckleistung **(3)** nach dem Stand der Technik. Es zeigt sich, dass die Eckleistung **(3)** eines Wickelantriebs, ausgeführt als Einzelantrieb nach dem Stand der Technik, in jedem Betriebspunkt **(4)** deutlich größer ist als die erforderliche Prozessleistung. Somit ist ein Betreiben desselben im optimalen Wirkungsgradbereich (Prozessleistung ca. 3/4 x Nennleistung des Motors) nicht möglich.

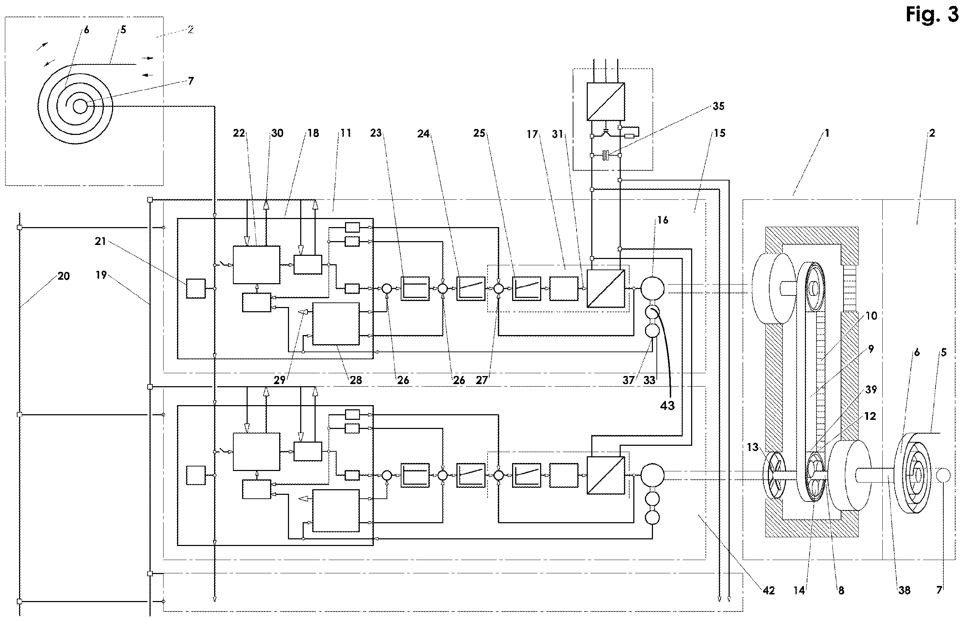

In **Figur 3** ist ein Blockschema für die Kommunikation und Regelung der Antriebseinheiten der Erfindung dargestellt. Es ist eine Warenbahn **(5)** dargestellt, die mit einer konstanten Geschwindigkeit V und einer konstanten Zugkraft F zu einer archimedischen Spirale mit einer variablen Drehzahl n und einem variablen Drehmoment T aufgewickelt wird. Ein mit der Antriebswelle **(38)** des Wickelkörpers **(6)** gekoppelter Drehgeber **(7)** dient zum Generieren einer realen Leitdrehachse. Dabei gelten folgende physikalischen Zusammenhänge:

$$P_{Prozess} = F_{Warenbahn} \times v_{Warenbahn} = T_{Wickelkörper\text{-}Ist} \times 2 \times \pi \times n_{Wickelkörper\text{-}Ist} = konstant$$

$$v_{Warenbahn} = d_{Wickelkörper\text{-}Ist} \times \pi \times n_{Wickelkörper\text{-}Ist} = konstant$$

Diese physikalischen Zusammenhänge gelten für zwei (und optional mehr als zwei) Antriebseinheiten **(15, 42)** mit Elektromotoren. Danach wird der Antriebseinheit **(15, 42)** ein Solldrehwinkel vom Antriebsbus **(19)** aus mitgeteilt. Gleiches gilt für den Drehzahlsollwert, den Verzögerungssollwert, den Beschleunigungssollwert und den Stromsollwert. Die Berechnung dieser Sollwerte kann mit einem Mikroprozessor **(18)** in einem der Wechselrichter **(17)** der Antriebs-einheiten **(15, 42)** erfolgen. Diesen berechneten Größen, wie Sollwinkel, Solldrehzahl, Sollverzögerung, Sollbeschleunigung und Sollstrom, folgen alle anderen Antriebseinheiten (15, 42) des Antriebssystems (1). Sie folgen somit einer virtuellen Leitdrehachse bzw. einer realen Leitdrehachse. Damit jeder einzelne Antrieb der vorgegebenen Konstantleistungskurve (32) präzise folgt, wird der Antriebsdatenbus (19) streng taktsynchron betrieben. Der auf Lichtwellenleiter oder geschirmten Datenkabeln als physikalischem Übertragungsmedium basierende Antriebsdatenbus (19) verbindet die Antriebseinheiten-Teilnehmer vorzugsweise in einer Ringstruktur.

Ein Element wie beispielsweise der Drehgeber (7) an der Antriebswelle (38) kann die Rolle eines Dispatchers übernehmen. Alternativ kann der Dispatcher mit einer Antriebseinheit (15, 42) bzw. mit dessen Wechselrichter (17) oder mit einem gesonderten Hardware-Modul (21) realisiert sein. Weiterhin werden die vom Antriebsbus (19) gelesenen Sollwertdaten $\Phi_{soll}$, $\alpha_{soll}$, $n_{soll}$, $I_{soll}$ in einen Funktionsbaustein "Leitwertaufbereitung" (22) eingelesen. In diesem ist ein auf das zu wickelnde Produkt spezifischer Algorithmus implementiert. Dieser kann entweder vom überlagerten Feldbus (20) eingelesen werden oder im Funktionsbaustein Leitwertaufbereitung (22) hinterlegt sein. In der Leitwertaufbereitung (22) werden die vom Antriebsbus (19) gelesenen Sollwerte entsprechend der Konstantleistungskurve (32) zu internen Sollwerten des Winkels, der Drehzahl, der Beschleunigung und Verzögerung sowie des Stroms umgeformt. Diese Ergebnisse werden einem Winkellageregler (23), einem Drehzahlregler (24) und einem Stromregler (25) zugeführt. Winkellageregler (23) und Drehzahlregler (24) besitzen zusätzlich Istwert-Eingänge (26), die dem Ausgang eines Drehzahlgebers und/oder eines Winkellagegebers (37) zugeordnet sind, der das Drehverhalten der Antriebseinheiten (15, 42) abtastet. Der Stromregler besitzt zusätzlich einen Istwert-Eingang (27), der dem Ausgang des Wechselrichters zugeordnet ist und den Ist-Strom des Servomotors zuführt. Zwischen dem Istwert-Eingang (26) des Winkellagereglers (23) und dem Ausgang des Gebers (37) ist ein Element "Lage-Istwert-Aufbereitung" (28) eingefügt, über den mittels einer damit kombinierten Ausgangsschnittstelle (29) die vom Ausgang Drehzahl-, Winkellagegeber (37) abgeleiteten Istwert-Daten für Winkellage, Drehzahl, Beschleunigung und Verzögerung auf den Antriebsbus (19) gesendet werden können. Der Wechselrichter (17) ist bekanntlich mit einem Stromregler (25) und einem nachgeschalteten Wechselrichter-Steuersatz ausgebildet, dessen Ausgang in den Leistungsteil (31) des Wechselrichters (17) geführt ist. Das Ergebnis ist ein hochdynamisches winkel-, drehzahl-, beschleunigungs-, verzögerungs- und drehmomentgetreues Verhalten der Antriebe untereinander.

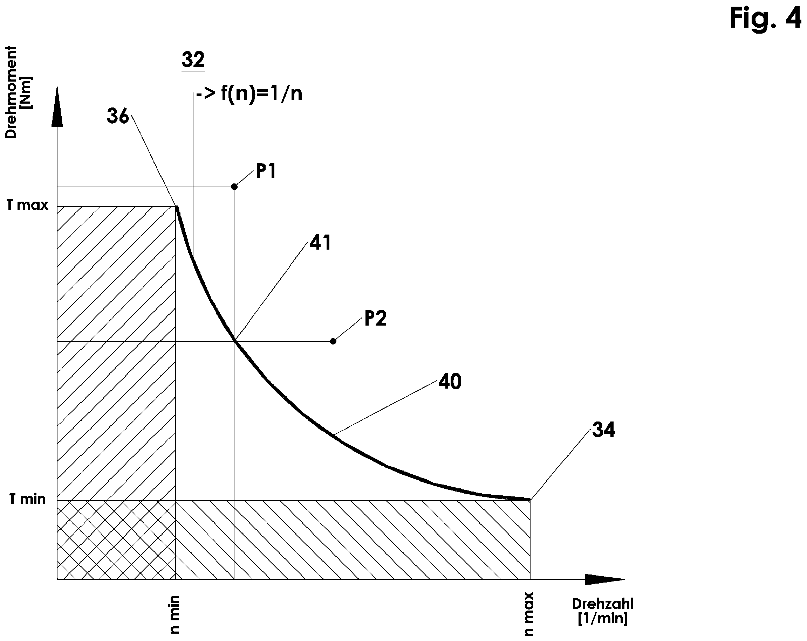

**Figur 4** zeigt eine typische mathematische Funktion f(n) (Konstantleistungskurve) für Wickelanwendungen, die dem vorliegend beschriebenen Ausführungsbeispiel einer erfindungsgemäßen Verwendung des Antriebssystems zugrunde liegt. Darin ist eine typische Konstantleistungskurve (32) abgebildet, wie sie bei Zentrumswicklern üblicherweise gegeben ist. Der Wickelvorgang beginnt, indem beide Antriebseinheiten (15, 42) gleichzeitig starten und winkel-, drehzahl- sowie drehmomentsynchron beschleunigen, bis der Wickelkörper (6) die erforderliche Betriebsdrehzahl am Startpunkt (34) erreicht. Einer der beiden Antriebseinheiten (15, 42) arbeitet generatorisch und speist Energie in einen Spannungszwischenkreis (35). Es gelten folgende physikalischen Zusammenhänge:

$$n_{Wickelkörper-Erforderlich-Punkt\ 0} = \left| n_{Leistungspfad\text{-}Getriebestrang\ 1} \right| + \left| n_{Leistungspfad\text{-}Getriebestrang\ 2} \right|$$

$$T_{Wickelkörper-Erforderlich-Punkt\ 0} = \left| T_{Leistungspfad\text{-}Getriebestrang\ 1} \right| + \left| T_{Leistungspfad\text{-}Getriebestrang\ 2} \right|$$

$$P_{Wickelkörper-Erforderlich-Punkt\ 0} = \left| P_{Leistungspfad\text{-}Getriebestrang\ 1} \right| + \left| P_{Leistungspfad\text{-}Getriebestrang\ 2} \right|$$

Von hier an folgen beide Antriebseinheiten (15, 42) - winkel-, drehzahl-, beschleunigungs-, verzögerungs- und drehmomentsynchron arbeitend - der Konstantleistungskurve (32), bis der Übergabepunkt 1 (40) erreicht ist. Hier angekommen, verzögert einer der beiden Antriebseinheiten (15, 42) seine Drehzahl, bis er still steht und mechanisch und/oder elektrisch festgesetzt wird. Gleichzeitig beschleunigt die andere Antriebseinheit (15, 42) ihre Drehzahl, sodass der Wickelkörper (6) die erforderliche Betriebsdrehzahl beibehält. Dieser erste "fliegende" Übergabevorgang erfolgt ebenfalls winkel-, drehzahl- und drehmomentsynchron. Es gelten folgende physikalischen Zusammenhänge:

$$n_{Wickelkörper-Erforderlich-Übergabepunkt\ 1} = n_{Leistungspfad\text{-}Getriebestrang\ 1\ oder\ 2}$$

$$T_{Wickelkörper-Erforderlich-Übergabepunkt\ 1} = T_{Leistungspfad\text{-}Getriebestrang\ 1\ oder\ 2}$$

$$P_{Wickelkörper-Erforderlich-Übergabepunkt\ 1} = P_{Leistungspfad\text{-}Getriebestrang\ 1\ oder\ 2}$$

Von hier an folgt die Antriebseinheit **(15, 42)** der Konstantleistungskurve **(32)**, bis der Übergabepunkt 2 **(41)** erreicht ist. Hier angekommen, verzögert der aktive Motor seine Drehzahl, bis er still steht und mechanisch und/oder elektrisch festgesetzt wird. Parallel beschleunigt die nicht aktive Antriebseinheit **(15, 42)** ihre Drehzahl, sodass der Wickelkörper **(6)** die erforderliche Betriebsdrehzahl beibehält. Dieser zweite "fliegende" Übergabevorgang erfolgt ebenfalls winkel-, drehzahl- und drehmomentsynchron. Es gelten folgende physikalischen Zusammenhänge:

$$n_{\text{Wickelkörper – Erforderlich – Übergabepunkt 2}} = n_{\text{Leistungspfad-Getriebestrang 2 oder 1}}$$

$$T_{\text{Wickelkörper – Erforderlich – Übergabepunkt 2}} = T_{\text{Leistungspfad-Getriebestrang 2 oder 1}}$$

$$P_{\text{Wickelkörper – Erforderlich – Übergabepunkt 2}} = P_{\text{Leistungspfad-Getriebestrang 2 oder 1}}$$

Von hier aus folgt die Antriebseinheit **(15, 42)** der Konstantleistungskurve **(32)** bis der Endpunkt **(36)** erreicht ist und der Wickelvorgang durch kontrolliertes Abbremsen beendet wird.

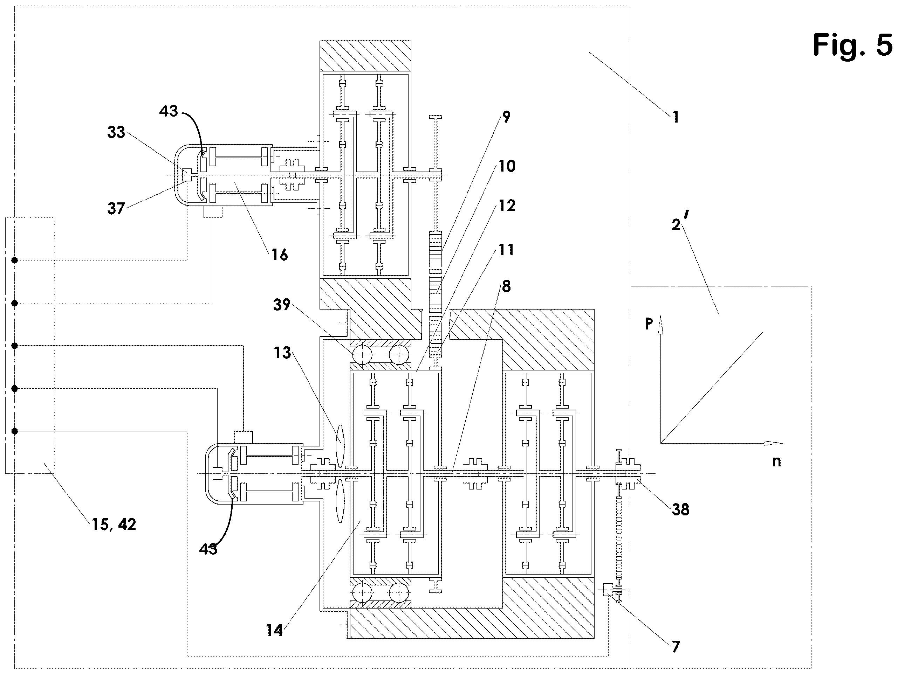

**Figur 5** zeigt ein Block-Schema des gesamten mechanischen Antriebsstrangs für weitere Anwendungen der Erfindung, wie Förder-, Extruder-, Schub-, Zugeinrichtung, Gleichlaufanwendungen, wobei gleichwirkende Elemente mit gleichen Bezugszeichen gekennzeichnet sind.

An eine Antriebswelle **(38)** der Förder-, Extruder-, Schub-, Zugeinrichtung oder der Gleichlaufanwendung **(6)** ist ein leistungsverzweigter Antriebsstrang **(8)** gekoppelt. Die Leistungsverzweigung wird analog zu Figur 3 über eine Getriebestufe **(9)** im Antriebsstrang **(8)** realisiert, die als Zahnriemen- oder Zahnkettentrieb **(10)** ausgeführt ist. Abtriebsseitig befindet sich ein außen am Gehäuse **(12)** mit Wälzlagern **(39)** gelagertes und über ein Gebläse **(13)** luftgekühltes Dreiwellen-Planetengetriebe **(14)**, welches mit mehreren Antriebseinheiten **(15, 42)** gekoppelt ist, die jedem Leistungspfad einzeln zugeordnet sind. Jeder Leistungspfad ist von einem Drehstrom-Synchron-Servomotor **(16)** mit Resolver oder Encoder **(33)** angetrieben. Jede Antriebseinheit **(15, 42)** wird von einem Wechselrichter **(17)** mit einem darin eingebautem Mikroprozessor **(18)** angesteuert, kontrolliert bzw. geregelt. Letzterer besitzt Schnittstellen sowohl zu einem Antriebsbus **(19)** auf Aktor/Sensor-Ebene als auch zu einem Feldbus **(20)** auf der nächsthöheren Ebene einer geschichteten Netzwerk-Architektur. Alle Wechselrichter **(17)** sind an den beiden Bussystemen **(19, 20)** vorzugsweise mit Parallelverhalten angekoppelt.

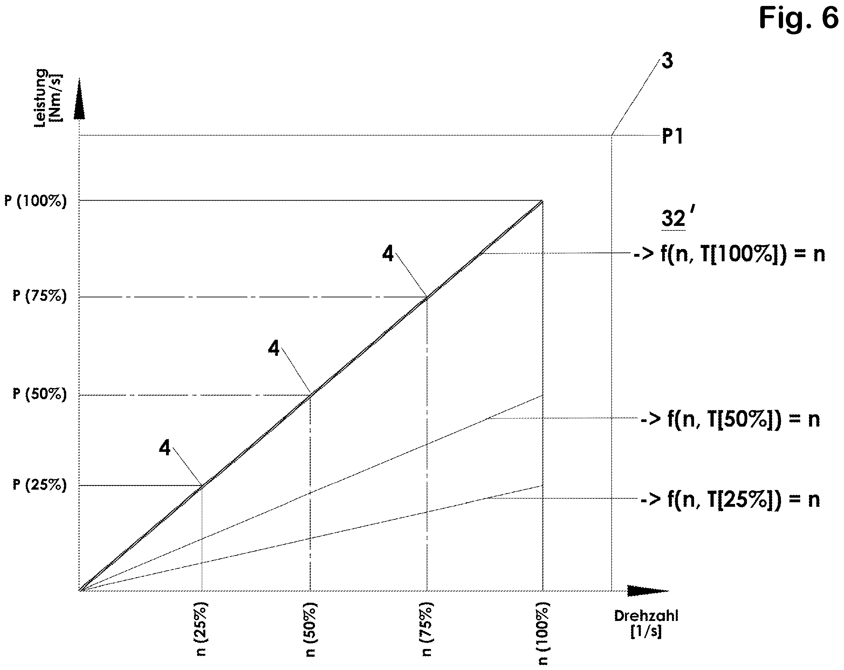

**Figur 6** zeigt eine typische linear ansteigende Leistungskennlinie **(32')** für Förder-, Extruder-, Schub-, Zuganwendungen, Gleichlaufanwendungen und installierte Eckleistung **(3)** nach dem Stand der Technik. Es zeigt sich, dass die Eckleistung **(3)** eines Förder-, Extruder-, Schub-, Zugeinrichtungs- oder Gleichlaufantriebs, ausgeführt als Einzelantrieb nach dem Stand der Technik, in jedem Betriebspunkt **(4)** im Teillastbetrieb deutlich größer ist als die erforderliche Prozessleistung. Somit ist ein Betreiben desselben im optimalen Wirkungsgradbereich (Prozessleistung ca. 3/4 x Nennleistung des Motors) nur in einem bestimmten Betriebsbereich möglich. Ein stetes Betreiben im optimalen Wirkungsgradbereich bei hoher Varianz ist nicht möglich.

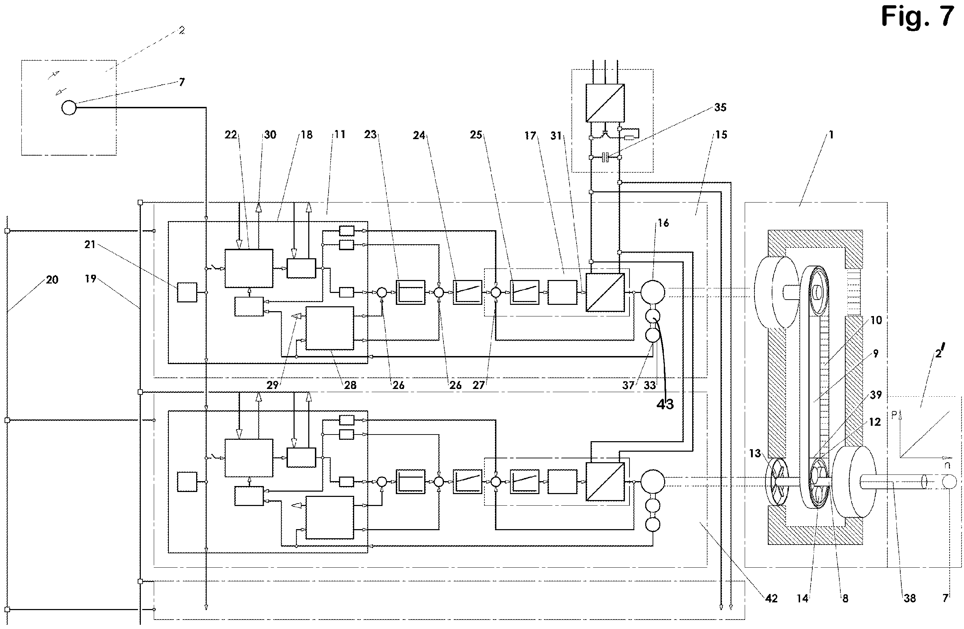

In **Figur 7** ist ein Blockschema für die Kommunikation und Regelung der Antriebseinheiten der Erfindung dargestellt, analog zu Figur 3. Es ist eine Antriebswelle **(38)** dargestellt, die mit einer Drehzahl n und einem Drehmoment T eine Förder-, Extruder-, Schub-, Zugeinrichtung, Gleichlaufanwendung antreibt. Ein mit der Antriebswelle **(38)** gekoppelter Drehgeber **(7)** dient zum Generieren einer realen Leitdrehachse. Dabei gelten folgende physikalischen Zusammenhänge:

$$P_{\text{Prozess}} = F_{\text{Ware}} \times v_{\text{Ware}} = T_{\text{Erforderlich}} \times 2 \times \pi \times n_{\text{Erforderlich}}$$

$$v_{\text{Ware}} = d_{\text{Wirk}} \times \pi \times n_{\text{Erforderlich}}$$

Diese physikalischen Zusammenhänge gelten für zwei (und optional mehr als zwei) Antriebseinheiten **(15, 42)** mit Elektromotoren. Danach wird der Antriebseinheit **(15, 42)** ein Solldrehwinkel vom Antriebsbus **(19)** aus mitgeteilt. Gleiches gilt für den Drehzahlsollwert, den Verzögerungssollwert, den Beschleunigungssollwert und den Stromsollwert. Die Berechnung dieser Sollwerte kann mit einem Mikroprozessor **(18)** in einem der Wechselrichter **(17)** der Antriebseinheiten **(15, 42)** erfolgen. Diesen berechneten Größen, wie Sollwinkel, Solldrehzahl, Sollverzögerung, Sollbeschleunigung und Sollstrom, folgen alle anderen Antriebseinheiten **(15, 42)** des Antriebssystems **(1)**. Sie folgen somit einer virtuellen Leitdrehachse bzw. einer realen Leitdrehachse. Damit jeder einzelne Antrieb der vorgegebenen Kennlinie **(32')** präzise folgt, wird der Antriebsdatenbus **(19)** streng taktsynchron betrieben. Der auf Lichtwellenleiter oder geschirmten Datenkabeln als physikalischem Übertragungsmedium basierende Antriebsdatenbus **(19)** verbindet die Antriebs-einheiten-Teilnehmer vorzugsweise in einer Ringstruktur.

Ein Element wie beispielsweise der Drehgeber **(7)** an der Antriebswelle **(38)** kann die Rolle eines Dispatchers übernehmen. Alternativ kann der Dispatcher mit einer Antriebseinheit **(15, 42)** bzw. mit dessen Wechselrichter **(17)** oder mit einem gesonderten Hardware-Modul **(21)** realisiert sein. Weiterhin werden die vom Antriebsbus **(19)** gelesenen Sollwertdaten $\Phi_{soll}$, $\alpha_{soll}$, $n_{soll}$, $I_{soll}$ in einen Funktionsbaustein "Leitwertaufbereitung" **(22)** eingelesen. In diesem ist ein auf das zu schiebende/ziehende/fördernde/pressende Material/Produkt spezifischer Algorithmus implementiert. Dieser kann entweder vom überlagerten Feldbus **(20)** eingelesen werden oder im Funktionsbaustein Leitwertaufbereitung **(22)** hinterlegt sein. In der Leitwertaufbereitung **(22)** werden die vom Antriebsbus **(19)** gelesenen Sollwerte entsprechend der linear steigenden Leistungskennlinie **(32')** zu internen Sollwerten des Winkels, der Drehzahl, der Beschleunigung und Verzögerung sowie des Stroms umgeformt. Diese Ergebnisse werden einem Winkellageregler **(23)**, einem Drehzahlregler **(24)** und einem Stromregler **(25)** zugeführt. Winkellageregler **(23)** und Drehzahlregler **(24)** besitzen zusätzlich Istwert-Eingänge **(26)**, die dem Ausgang eines Drehzahlgebers und/oder Winkellagegebers **(37)** zugeordnet sind, der das Drehverhalten der Antriebseinheiten **(15, 42)** abtastet. Der Stromregler besitzt zusätzlich einen Istwert-Eingang **(27)**, der dem Ausgang des Wechselrichters zugeordnet ist und den Ist-Strom des Servomotors zuführt. Zwischen dem Istwert-Eingang **(26)** des Winkellagereglers **(23)** und dem Ausgang des Gebers **(37)** ist ein Element "Lage-Istwert-Aufbereitung" **(28)** eingefügt, über den mittels einer damit kombinierten Ausgangsschnittstelle **(29)** die vom Ausgang Drehzahl-, Winkellagegeber **(37)** abgeleiteten Istwert-Daten für Winkellage, Drehzahl, Beschleunigung und Verzögerung auf den Antriebsbus **(19)** gesendet werden können. Der Wechselrichter **(17)** ist bekanntlich mit einem Stromregler **(25)** und einem nachgeschalteten Wechselrichter-Steuersatz ausgebildet, dessen Ausgang in den Leistungsteil **(31)** des Wechselrichters **(17)** geführt ist. Das Ergebnis ist ein hochdynamisches winkel-, drehzahl-, beschleunigungs-, verzögerungs- und drehmomentgetreues Verhalten der Antriebe untereinander.

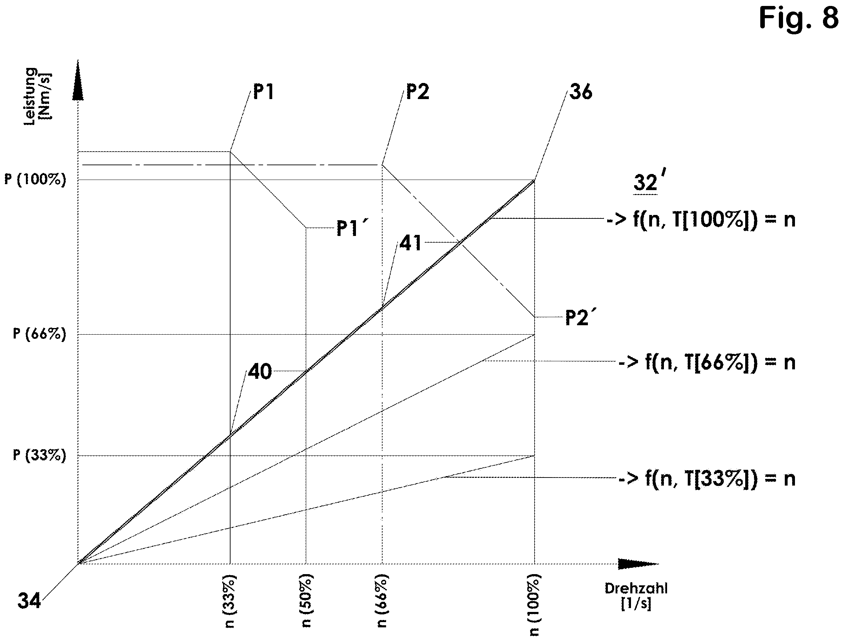

**Figur 8** zeigt eine typische mathematische Funktion f(n) (Linear steigende Leistungskennlinie, Konstantmoment) für Förder-, Extruder-, Schub-, Zugeinrichtungs-, Gleichlaufanwendungen und das Ausführungsbeispiel einer erfindungsgemäßen Verwendung des Antriebssystems. Darin ist eine typische linear steigende Leistungskennlinie **(32')** abgebildet, wie sie bei Förder-, Extruder-, Schub-, Zugeinrichtungs-, Gleichlaufanwendungen üblicherweise gegeben ist. Der Vorgang beginnt, indem eine der beiden Antriebseinheiten **(15, 42)** am Startpunkt **(34)** beschleunigt und - entsprechend der Leistungskennlinie - die erforderliche Betriebsdrehzahl und das Drehmoment an der Antriebswelle **(38)** zur Verfügung stellt. Im ersten Drittel des Gesamt-Leistungsbereichs gelten folgende physikalischen Zusammenhänge:

$$n_{\text{Erforderlich} - 0\% \text{ bis } 33\%} = \left| n_{\text{Leistungspfad-Getriebestrang 1 oder 2}} \right|$$

$$T_{\text{Erforderlich} - 0\% \text{ bis } 33\%} = \left| T_{\text{Leistungspfad-Getriebestrang 1 oder 2}} \right|$$

$$P_{\text{Erforderlich} - 0\% \text{ bis } 33\%} = \left| P_{\text{Leistungspfad-Getriebestrang 1 oder 2}} \right|$$

Hier in Übergabezone 1 **(40)** angekommen, verzögert der aktive Motor seine Drehzahl bis er still steht und mechanisch durch die Haltebremse **(43)** des Motors und/oder elektrisch festgesetzt wird. Parallel beschleunigt die nicht aktive Antriebseinheit **(15, 42)** ihre Drehzahl, sodass die Antriebswelle **(38)** die erforderliche Betriebsdrehzahl und das Drehmoment beibehält. Dieser erste "fliegende" Übergabevorgang erfolgt winkel-, drehzahl- und drehmoment-synchron. Im zweiten Drittel des Gesamt-Leistungsbereichs gelten folgende physikalischen Zusammenhänge:

$$n_{\text{Erforderlich} - 33\% \text{ bis } 66\%} = \left| n_{\text{Leistungspfad-Getriebestrang 2 oder 1}} \right|$$

$$T_{\text{Erforderlich} - 33\% \text{ bis } 66\%} = \left| T_{\text{Leistungspfad-Getriebestrang 2 oder 1}} \right|$$

$$P_{\text{Erforderlich} - 33\% \text{ bis } 66\%} = \left| P_{\text{Leistungspfad-Getriebestrang 2 oder 1}} \right|$$

Hier in Übergabezone 2 **(41)** angekommen, verzögert der aktive Motor etwas seine Drehzahl. Parallel beschleunigt die nicht aktive Antriebseinheit **(15, 42)** seine Drehzahl, sodass die Antriebswelle **(38)** die erforderliche Betriebsdrehzahl und das Drehmoment beibehält. Dieser zweite "fliegende" Übergabevorgang erfolgt ebenfalls winkel-, drehzahl- und drehmomentsynchron. Von hier an folgen beide Antriebseinheiten (15, 42) - winkel-, drehzahl-, beschleunigungs-, verzögerungs- und drehmomentsynchron arbeitend - der Leistungskennlinie (32') bis der Endpunkt (36) erreicht ist und damit die maximale Leistungsfähigkeit des gesamten Antriebssystems unter Dauerlastbedingungen erreicht ist. Im dritten Drittel des Gesamt-Leistungsbereichs gelten folgende physikalischen Zusammenhänge:

$$n_{\text{Erforderlich} - 66\% \text{ bis } 100\%} = \left| n_{\text{Leistungspfad-Getriebestrang 1}} \right| + \left| n_{\text{Leistungspfad-Getriebestrang 2}} \right|$$

$$T_{\text{Erforderlich} - 66\% \text{ bis } 100\%} = \left| T_{\text{Leistungspfad-Getriebestrang 1}} \right| + \left| T_{\text{Leistungspfad-Getriebestrang 2}} \right|$$

$$P_{\text{Erforderlich} - 66\% \text{ bis } 100\%} = \left| P_{\text{Leistungspfad-Getriebestrang 1}} \right| + \left| P_{\text{Leistungspfad-Getriebestrang 2}} \right|$$

Es besteht auch die Möglichkeit, dass im Leistungsbereich von 0% bis 66 % eine der beiden Antriebseinheiten generatorisch arbeitet und Energie in einen Spannungszwischenkreis (36) speist. In diesem Fall gelten die gleichen physikalischen Zusammenhänge wie im Leistungsbereich von 66% bis 100%.

Der Vorgang kann durch kontrolliertes abbremsen beendet werden.

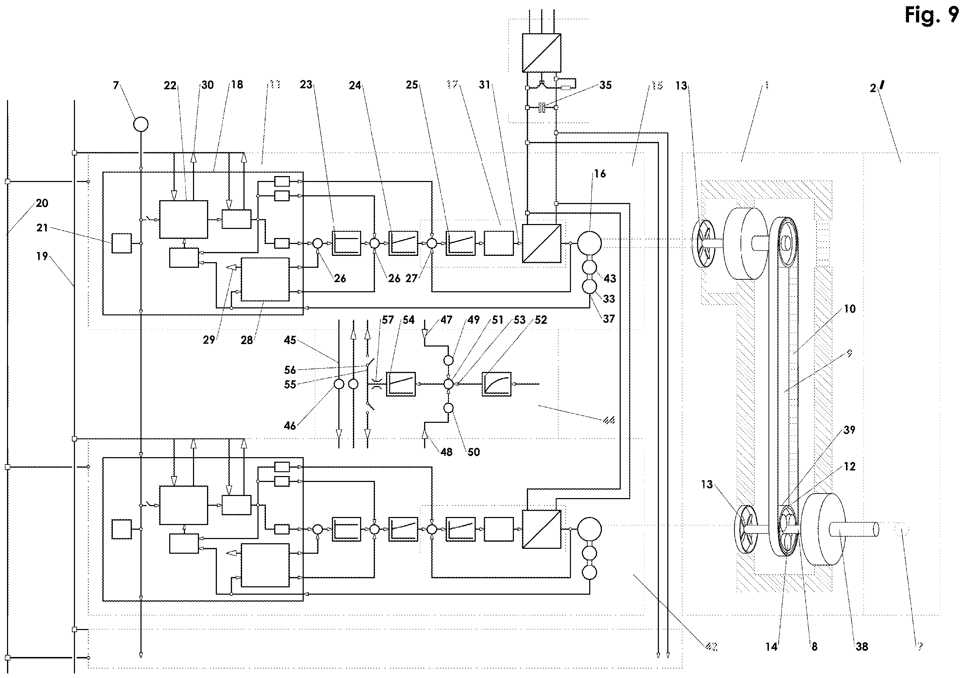

In **Figur 9** ist ein Block-Schema einer weiteren Möglichkeit für die Kommunikation und Regelung der Antriebseinheiten der Erfindung dargestellt. Die Synchronisierung kann in diesem Fall durch eine Lage- und/oder Drehzahl- und/oder Drehmoment-Ausgleichsregelung realisiert werden. Eine dynamische Drehmoment-Ausgleichsregelung die an der Leistungsverzweigung ein statisches und/oder dynamisches Drehmoment-Gleichgewicht bewerkstelligt wird in diesem Ausführungsbeispiel genauer beschrieben.

Zur Synchronisierung mindestens zweier Antriebseinheiten (15, 42) mittels einer Drehmoment-Ausgleichsregelung ist eine Zusatzvorrichtung vorgesehen (44). Hierbei gibt die Leitwertaufbereitung (22) das Lagesollwertsignal und/oder Drehzahlsollwertsignal an den Drehzahlregler (24) der ersten Antriebseinheit (15 oder 42) vor. Der gleiche Drehzahlsollwert (45) wird auch als Drehzahlsollwert (45) an die zweite Antriebseinheit (42 oder 15) zugeführt. Zur Berücksichtigung unterschiedlicher Drehzahlniveaus der einzelnen Antriebseinheiten, im Verhältnis zueinander, ist eine Einstellmöglichkeit (46) vorgesehen. Unterschiedliche Übersetzungsverhältnisse der einzelnen Antriebsstränge untereinander können auch gegebenenfalls in den Istwertkreisen (26) und/oder in der Istwertaufbereitung (28) berücksichtigt werden.

Weiterhin ermöglicht die Zusatzvorrichtung (44), dass der Stromsollwert (47) nach dem Drehzahlregler der ersten Antriebseinheit (15) und der Stromsollwert (48) des Drehzahlreglers der zweiten Antriebseinheit (42) miteinander verglichen werden. Zur Berücksichtigung unterschiedlicher Drehmomentniveaus der einzelnen Antriebseinheiten untereinander ist jeweils eine Einstellmöglichkeit über eine dynamische Wichtung (49, 50) vorgesehen. Die Zusammenführung der gewichteten Drehmomentniveaus ist symbolisch durch den Vergleicher (51) dargestellt.

Um Aufschwingungen der Signale zu unterbinden und Störsignalfrequenzen in den Regelkreisen zu eliminieren, wird zusätzlich ein Tiefpassfilter (52) eingesetzt. Sein Ausgangssignal (53) wird als Korrektursignal dem Vergleicher (51) zugeführt. Der Differenzwert am Vergleicher (51) wird nun einem Ausgleichsregler (54) zugeführt, dessen Ausgangssignal (55) über einen Schalter (56) zusätzlich auf den Sollwert eines Drehzahlreglers (24) aufschaltbar ist. Ferner ist noch, wie durch den Limiter (57) angedeutet, der Integrator im Ausgleichsregler (54) derart in seinem Ausgang begrenzbar, dass vorgegebene und/oder unzulässige Werte nicht überschritten werden können.

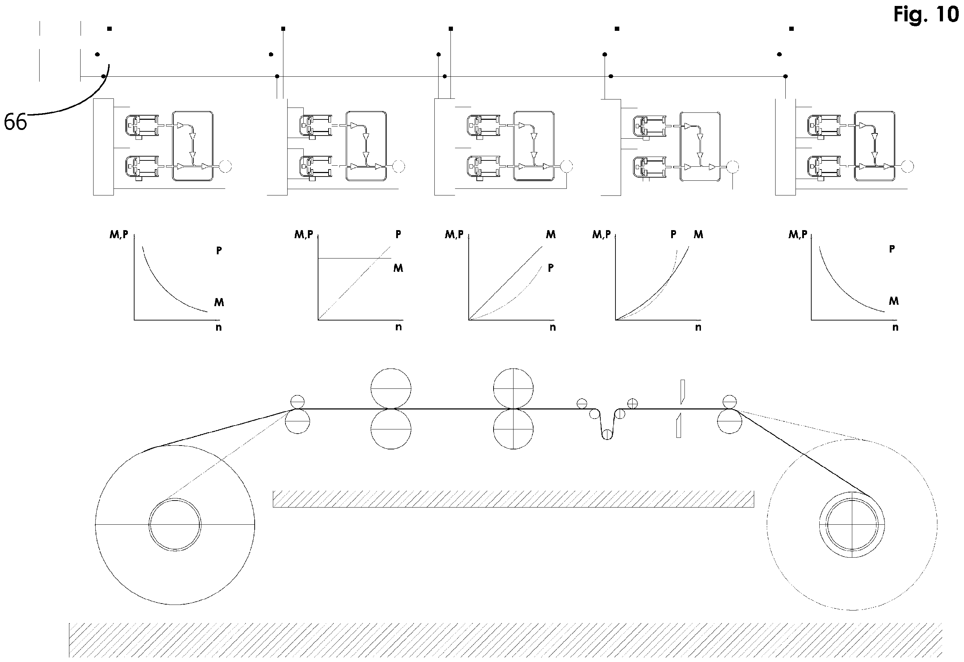

**Figur 10** zeigt ein Block-Schema eines Gesamtsystems mit mechanisch über Planetengetriebe leistungsverzweigten, über ein elektronisches Synchronisationssystem vernetzten und energetisch über einen Spannungszwischenkreis (66) verknüpften Antriebssystemen. Die einzelnen schematisch angedeuteten Antriebsstränge weisen jeweils zwei Antriebseinheiten bzw. Motoren auf, die über ein Planetengetriebe angekoppelt sind. Je nach Applikationszweck (Zentrumswickler, Antriebsrollen) unterliegen die einzelnen Antriebsstränge unterschiedlichen Drehzahl/Moment bzw. Leistungskennlinien, wie jeweils angedeutet. Durch den gemeinsamen Zwischenkreis können generatorisch arbeitende Elektromotoren ihre Energie anderen Antriebsmotoren zur Verfügung stellen.

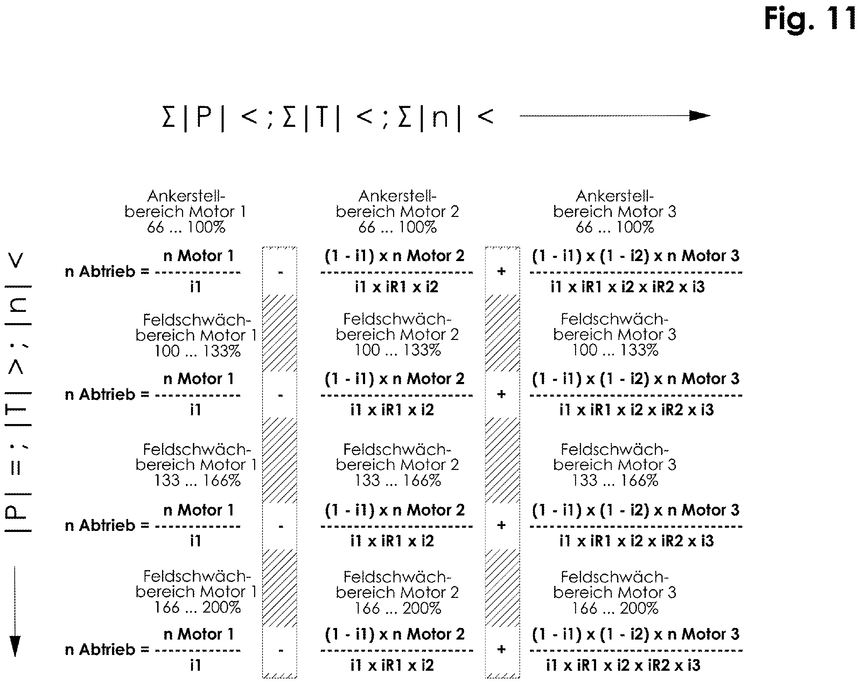

**Figur 11** zeigt eine Gleichungsmatrix des über ein Planetengetriebe leistungsverzweigten Antriebssystems mit drei Antriebsmotoren in Abhängigkeit von Ankerstellbereich, Feldschwächbereich, Drehmoment, Drehzahl und Leistung. Die Abtriebsdrehzahl ergibt sich gemäß den Willis-Gleichungen. Dabei werden die Motoren bei geringeren Drehzahlanforderungen im "klassischen" Ankerstellbereich betrieben, und bei zunehmenden Anforderungen hinsichtlich zunehmendem Drehzahlen in einem Feldschwächbereich oberhalb der Nenndrehzahl betrieben, wodurch das gleichzeitig Drehmoment entsprechend geschwächt wird und die Leistung in etwa gleich bleibt (siehe die Tendenzangaben zu P, T und n links seitlich der Matrix). Falls höhere Leistung bzw. ein höheres Drehmoment und höhere Drehzahl erforderlich sind, so wird dies über das Zuschalten weiterer Motoren erreicht, die vorher blockiert wurden, vgl. die Tendenzangaben in der Zeile oberhalb der Matrix.

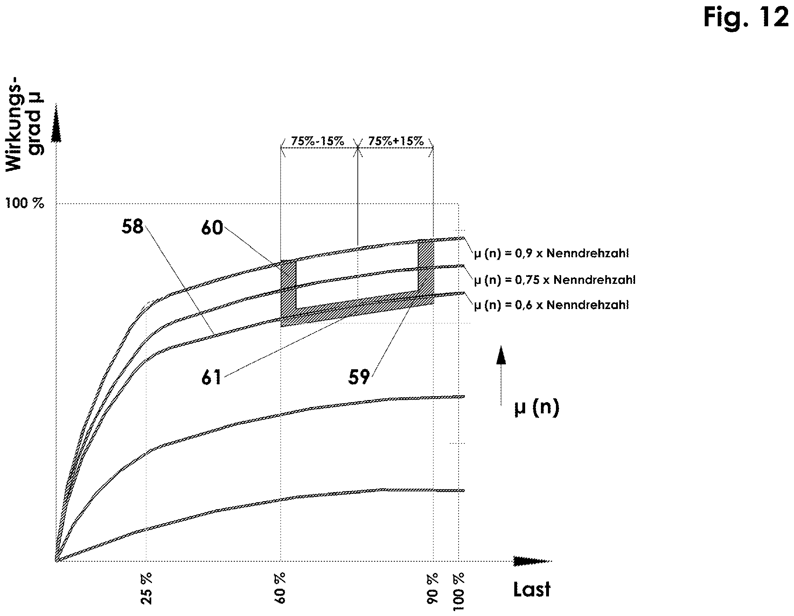

**Figur 12** zeigt eine typische Wirkungsgradkennlinie **(58)** eines Elektromotors nach dem Stand der Technik. Es zeigt sich, dass der optimale Wirkungsgrad des Elektromotors in Abhängigkeit von Drehzahl und Drehmoment bei 0,75 $\pm$ 0,15 x Nenndrehzahl und 0,75 $\pm$ 0,15 x Nennmoment liegt. Ein stetes Betreiben im optimalen Wirkungsgradbereich bei hoher Varianz ist nicht möglich. Um dieses zu ermöglichen, muss an den Grenzlinien ein Umschalten erfolgen.

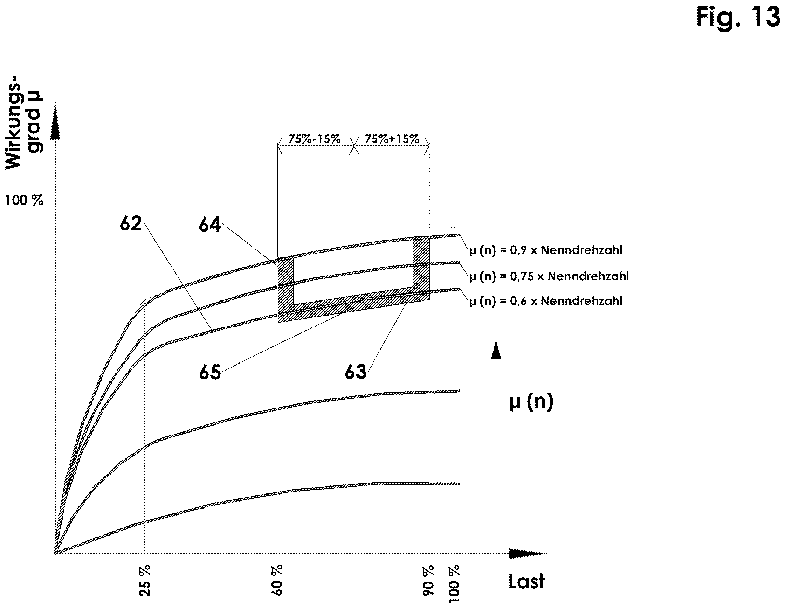

**Figur 13** zeigt eine typische Wirkungsgradkennlinie **(62)** eines Getriebes nach dem Stand der Technik. Es zeigt sich, dass der optimale Wirkungsgrad des Getriebes in Abhängigkeit von Drehzahl und Drehmoment bei 0,75 $\pm$ 0,15 x Nenndrehzahl und 0,75 $\pm$ 0,15 x Nennmoment liegt. Ein stetes Betreiben im optimalen Wirkungsgradbereich bei hoher Varianz ist nicht möglich. Um dieses zu ermöglichen, muss an den Grenzlinien ebenfalls ein Umschalten erfolgen.

Bezuqszeichenliste

| | |
|---|---|
| 1 | Antriebssystem |
| 2 | Anwendung mit Konstantleistungskennlinie |
| 2' | Anwendung mit linear/hyperbolisch steigender Leistungskennlinie |
| 3 | Eckleistung |
| 4 | Betriebspunkt |
| 5 | Warenbahn |
| 6 | Wickelkörper |
| 7 | Drehgeber |
| 8 | Antriebsstrang |
| 9 | Getriebestufe |
| 10 | Zahnriemen / Zahnkette |
| 11 | Synchronisationssystem |
| 12 | Gehäuse |
| 13 | Gebläse |
| 14 | Planetengetriebe |
| 15 | Antriebseinheit |
| 16 | Elektromotor |
| 17 | Wechselrichter |
| 18 | Mikroprozessor |
| 19 | Antriebsbus |
| 20 | Feldbus |
| 21 | Hardware-Modul |
| 22 | Leitwertaufbereitung |
| 23 | Winkellageregler |
| 24 | Drehzahlregler |
| 25 | Stromregler |
| 26 | Istwert-Eingang Drehzahl-, Winkellagergeber |
| 27 | Istwert-Eingang Wechselrichter |
| 28 | Lage-Istwert-Aufbereitung Element |
| 29 | Ausgangsschnittstelle |
| 30 | Schnittstelle Synchronisationssystem |
| 31 | Leistungsteil |
| 32 | Konstantleistungskurve 32'linear/hyperbolisch ansteigende Leistungskennlinie |
| 33 | Encoder / Resolver |
| 34 | Startpunkt |
| 35 | Spannungszwischenkreis |
| 36 | Endpunkt |
| 37 | Ausgang Drehzahl-, Winkellagergeber |
| 38 | Antriebswelle |
| 39 | Wälzlager |
| 40 | Übergabezone 1 |
| 41 | Übergabezone 2 |
| 42 | Antriebseinheit |
| 43 | Haltebremse des Elektromotors |
| 44 | Zusatzvorrichtung |

45 Drehzahlsollwert
46 Einstellmöglichkeit Übersetzungsverhältnis
47 Stromsollwert Antriebseinheit 1
48 Stromsollwert Antriebseinheit 2
49 Dynamische Wichtung Antriebseinheit 1
50 Dynamische Wichtung Antriebseinheit 2
51 Vergleicher
52 Tiefpassfilter
53 Ausgangssignal Tiefpassfilter
54 Ausgleichsregler
55 Ausgangssignal Ausgleichsregler
56 Schalter
57 Limiter
58 Wirkungsgradkennlinie eines Elektromotors
59 Schaltbereich Überlastgrenze - Elektromotor
60 Schaltbereich optimale Drehmomentgrenze - Elektromotor
61 Schaltbereich optimale Drehzahlgrenze - Elektromotor
62 Wirkungsgradkennlinie eines Getriebes
63 Schaltbereich Überlastgrenze - Getriebe
64 Schaltbereich optimale Drehmomentgrenze - Getriebe
65 Schaltbereich optimale Drehzahlgrenze - Getriebe
66 gemeinsamer Zwischenkreis

**Patentansprüche**

1.  Antriebssystem (1) für Förder-, Extruder-, Schub-, Zugeinrichtungen, Zentrumswickler und Gleichlaufanwendungen (2) mit mindestens einem leistungsverzweigten Antriebsstrang (8), wobei die Leistungsverzweigung über eine Getriebestufe (9) in dem Antriebsstrang (8) realisiert ist, wobei der Antriebsstrang (8) eine erste und eine zweite Antriebseinheit (15, 42) aufweist, die über ein elektronisches Synchronisationssystem (11) gekoppelt sind, wobei die zweite Antriebseinheit (42; 15) mit einer höheren Getriebeübersetzung angebunden ist als die erste Antriebseinheit (15; 42),

    wobei eine zeit-, weg- und/oder winkel- und/oder drehzahl- und/oder beschleunigungs- und/oder verzögerungs- und/oder drehmomentabhängige Steuerung der Antriebseinheiten (15, 42) derart konfiguriert ist, um in Abhängigkeit einer linear oder hyperbolisch steigenden Leistungskennlinie oder einer Konstantleistungskurve (32) eine synchrone Beschleunigung oder Abbremsung der ersten und/oder der zweiten Antriebseinheit (15, 42) zu regeln; und
    wobei alle Antriebseinheiten energetisch über einem Spannungszwischenkreis (35) verknüpft sind und einzeln und/oder gemeinsam motorisch und/oder generatorisch arbeiten können,

    **dadurch gekennzeichnet,**

    **dass** der Energieausgleich in dem dafür vorgesehenen Spannungszwischenkreis (35) mit integriertem Bremschopper und Bremswiderstand erfolgt,
    **dass** die Antriebseinheiten Elektromotoren (16) aufweisen, die wenigstens zeitweise einzeln und/oder gemeinsam im Bereich der Feldschwächung betrieben werden,
    **dass** die Drehzahl-/Drehmomentkennlinie des Antriebssystems in wenigstens drei Bereiche aufgeteilt wird, und dass

    (a) in einem ersten Bereich mit niedrigen Drehzahlen die Antriebeinheiten in einem der folgenden Modi betrieben werden:

    (aa) Antrieb einer Antriebseinheit als Motor und der anderen Antriebseinheit als Generator,
    (ab) Betrieb nur der ersten Antriebeinheit im Ankerstellbereich,
    (ac) Betrieb nur der zweiten Antriebeinheit im Ankerstellbereich,

    (b) in einem zweiten Bereich mit mittleren Drehzahlen die Antriebeinheiten in einem der folgenden Modi betrieben werden:

(ba) Antrieb einer Antriebseinheit als Motor und der anderen Antriebseinheit als Generator,
(bb) Betrieb nur der zweiten Antriebseinheit im Feldschwächbereich mit bis zu 150% der Nenndrehzahl,
(bc) Betrieb nur der ersten Antriebeinheit im Ankerstellbereich,

(c) in einem dritten Bereich mit hohen Drehzahlen die Antriebeinheiten in einem der folgenden Modi betrieben werden:

(ca) Doppelantrieb mit beiden Antriebseinheiten als Motor,
(cb) Betrieb nur der zweiten Antriebseinheit im Feldschwächbereich mit bis zu 300% der Nenndrehzahl,
(cc) Betrieb nur der ersten Antriebseinheit im Feldschwächbereich mit bis zu 150% der Nenndrehzahl,

wobei die mittleren Drehzahlen kleiner als die hohen Drehzahlen und größer als die niedrigen Drehzahlen sind.

2. Antriebssystem (1) nach Anspruch 1,
**dadurch gekennzeichnet,**
**dass** die Antriebseinheiten (15, 42) nach Leitdrehachsenwerten über Wechselrichter (17) gesteuert werden, die einem ermittelten Sollwert folgen.

3. Antriebssystem (1) nach Anspruch 1 oder 2,

**dadurch gekennzeichnet,**
**dass** das Synchronisationssystem (11) als Software-Modul ausgestaltet ist, wobei die Steuerung der/des Förder-, Extruder-, Schub-, Zugeinrichtung, Zentrumswicklers oder Gleichlaufanwendung (2) mindestens einer Antriebseinheit (15, 42) über ein Bussystem (19, 20) erfolgt.

4. Antriebssystem (1) nach einem der voran stehenden Ansprüche,
**dadurch gekennzeichnet,**
**dass** periphere Einrichtungen, insbesondere Zuführ-, Abwickel-, Tänzer-, Aufwickel-, Schneid-, Verlege- und Changiereinrichtungen mit den Antriebseinheiten (15, 42) synchronisiert und energetisch verknüpft sind.

5. Antriebssystem (1) nach einem der voran stehenden Ansprüche,
**dadurch gekennzeichnet,**
**dass** die Getriebestufe (9) über einen Zahnriemen oder Zahnkette (10) an- getrieben, abtriebsseitig gelagert und als Planetengetriebe (14) ausgestaltet ist.

6. Antriebssystem (1) nach einem der voran stehenden Ansprüche,
**dadurch gekennzeichnet,**
**dass** die Antriebseinheiten (15, 42) Elektromotoren (16), insbesondere Drehstrom-Synchron-Servomotoren, Synchron-Reluktanzmotoren, Dreh- strom-Asynchron-Servomotoren, Drehstrom-Asynchronmotoren oder Gleichstrommotoren aufweisen.

7. Antriebssystem (1) nach einem der vorhergehenden Ansprüche,
**dadurch gekennzeichnet,**
**dass** die mechanischen Leistungspfade mit unterschiedlichen Übersetzungsverhältnissen ausgelegt sind, bevorzugt jeweils mit dem Faktor von 2,0 abweichenden Übersetzungsverhältnissen.

8. Antriebssystem (1) nach einem der vorhergehenden Ansprüche,
**dadurch gekennzeichnet,**
**dass** wenigstens einer oder alle mechanischen Leistungspfade eines Antriebsstranges selektiv mechanisch und/oder elektrisch in beide Drehrichtungen festsetzbar sind.

9. Antriebsystem (1) nach einem der vorhergehenden Ansprüche,
**dadurch gekennzeichnet,**
**dass** wenigstens eine Ausgangswelle einer Antriebseinheit ein Schwungrad zur Dämpfung von Drehmomentstößen und/oder zur Reduktion des Leerlaufdrehmoments aufweist, wobei das Schwungrad als Lüfterrad mit vergrößertem Trägheitsmoment ausgebildet ist.

10. Antriebssystem (1) nach einem der vorhergehenden Ansprüche,
**dadurch gekennzeichnet,**
**dass** zur Synchronisierung mindestens zweier Antriebseinheiten (15, 42) mittels einer Drehmoment-Ausgleichsregelung eine Zusatzvorrichtung vorgesehen (44) ist, bei der eine Leitwertaufbereitung (22) ein Lagesollwertsignal und/oder ein Drehzahlsollwertsignal an einen Drehzahlregler (24) der ersten Antriebseinheit (15, 42) vorgibt, und der gleiche Drehzahlsollwert (45) auch als Drehzahlsollwert (45) mit einer an die Getriebeübersetzung angepassten Wichtung an die zweite Antriebseinheit (42, 15) zugeführt wird.

11. Verfahren zum Antrieb eines Antriebssystems für Förder-, Extruder-, Schub--, Zugeinrichtungen, Gleichlaufanwendungen oder Zentrumswickler (2) mit mindestens einem leistungsverzweigten Antriebsstrang (8), wobei die Leistungsverzweigung über eine Getriebestufe (9) in dem Antriebsstrang (8) realisiert ist, wobei der Antriebsstrang (8) eine erste und eine zweite Antriebseinheit (15, 42) aufweist, die über ein elektronisches Synchronisationssystem (11) gekoppelt sind, wobei die zweite Antriebseinheit (42; 15) mit einer höheren Getriebeübersetzung angebunden ist als die erste Antriebseinheit (15; 42),

wobei eine zeit-, weg- und/oder winkel- und/oder drehzahl- und/oder beschleunigungs- und/oder verzögerungs- und/oder drehmomentabhängig Steuerung der Antriebseinheiten (15, 42) derart konfiguriert ist, um in Abhängigkeit einer linear oder hyperbolisch steigenden Leistungskennlinie oder einer Konstantleistungskurve (32) eine synchrone Beschleunigung oder Abbremsung der ersten und/oder der zweiten Antriebseinheit (15, 42) zu regeln; wobei
alle Antriebseinheiten energetisch über einem Spannungszwischenkreis (35) verknüpft sind und einzeln und/oder gemeinsam motorisch und/oder generatorisch arbeiten können,

**dadurch gekennzeichnet, dass**

der Energieausgleich in dem dafür vorgesehenen Spannungszwischen kreis (35) mit integriertem Bremschopper und Bremswiderstand erfolgt, dass die Antriebseinheiten Elektromotoren (16) aufweisen, die wenigstens zeitweise einzeln und/oder gemeinsam im Bereich der Feldschwächung betrieben werden,
dass die Drehzahl-/Drehmomentkennlinie des Antriebssystems in wenigstens drei Bereiche aufgeteilt wird, und dass

(a) in einem ersten Bereich mit niedrigen Drehzahlen die Antriebeinheiten in einem der folgenden Modi betrieben werden:

(aa) Antrieb einer Antriebseinheit als Motor und der anderen Antriebseinheit als Generator,
(ab) Betrieb nur der ersten Antriebeinheit im Ankerstellbereich,
(ac) Betrieb nur der zweiten Antriebseinheit im Ankerstellbereich,

(b) in einem zweiten Bereich mit mittleren Drehzahlen die Antriebeinheiten in einem der folgenden Modi betrieben werden:

(ba) Antrieb einer Antriebseinheit als Motor und der anderen Antriebseinheit als Generator,
(bb) Betrieb nur der zweiten Antriebseinheit im Feldschwächbereich mit bis zu 150% der Nenndrehzahl,
(bc) Betrieb nur der ersten Antriebeinheit im Ankerstellbereich,

(c) in einem dritten Bereich mit hohen Drehzahlen die Antriebeinheiten in einem der folgenden Modi betrieben werden:

(ca) Doppelantrieb mit beiden Antriebseinheiten als Motor,
(cb) Betrieb nur der zweiten Antriebseinheit im Feldschwächbereich mit bis zu 300% der Nenndrehzahl,
(cc) Betrieb nur der ersten Antriebeinheit im Feldschwächbereich mit bis zu 150% der Nenndrehzahl,

wobei die mittleren Drehzahlen kleiner als die hohen Drehzahlen und größer als die niedrigen Drehzahlen sind.

12. Verfahren nach Anspruch 11,
**dadurch gekennzeichnet,**

**dass** die Steuerung der Antriebseinheiten (15, 42) nach Leitdrehachsenwerten erfolgt, wobei die Steuerung einem ermittelten Sollwert folgt.

13. Verfahren nach Anspruch 11 oder 12,
   **dadurch gekennzeichnet,**
   **dass** periphere Einrichtungen, insbesondere Zuführ-, Abwickel-, Tänzer-, Aufwickel-, Schneid-, Verlege- und Changiereinrichtungen mit dem Antriebssystem (1) synchronisiert und energetisch verknüpft sind.

14. Verfahren nach einem der Ansprüche 11 bis 13,
   wobei die Getriebeübersetzung der zweiten Antriebseinheit größer ist als die Getriebeübersetzung der ersten Antriebseinheit im Bereich von 1,5-fach bis 3-fach ist.

15. Verfahren nach Anspruch 14, wobei die Getriebeübersetzung der zweiten Antriebseinheit 2 Mal größer ist als die Getriebeübersetzung der ersten Antriebseinheit.


## Claims

1. Drive system (1) for conveying, extruding, pushing or pulling devices, centre winders and synchronism applications (2) with at least one power-split drive train (8), wherein the power split is realized by means of a transmission stage (9) in the drive train (8), wherein the drive train (8) has a first and a second drive unit (15, 42) that are coupled by means of an electronic synchronization system (11), wherein the second drive unit (42; 15) is connected with a higher transmission speed ratio than the first drive unit (15; 42),

   wherein a time-dependent, travel-dependent and/or angle-dependent and/or rotational-speed-dependent and/or acceleration-dependent and/or deceleration-dependent and/or torque-dependent control regime of the drive units (15, 42) is configured to control a synchronous acceleration or braking of the first and/or second drive unit (15, 42) in a manner dependent on a linearly or hyperbolically rising power characteristic curve or a constant-power curve (32); and

   wherein all drive units are linked in terms of energy via an intermediate voltage circuit (35) and can operate individually and/or jointly in motor and/or generator mode,

   **characterized**

   **in that** the energy compensation is performed in the intermediate voltage circuit (35) provided for the purpose with an integrated brake chopper and brake resistance,
   **in that** the drive units have electric motors (16) that are operated at least intermittently individually and/or jointly in the field weakening range,
   **in that** the rotational speed/torque characteristic curve of the drive system is divided into at least three ranges, and in that,

   (a) in a first range with low rotational speeds, the drive units are operated in one of the following modes:

   (aa) drive of one drive unit as a motor and of the other drive unit as a generator,
   (ab) operation only of the first drive unit in the armature actuation range,
   (ac) operation only of the second drive unit in the armature actuation range,

   (b) in a second range with medium rotational speeds, the drive units are operated in one of the following modes:

   (ba) drive of one drive unit as a motor and of the other drive unit as a generator,
   (bb) operation only of the second drive unit in the field weakening range at up to 150% of the rated rotational speed,
   (bc) operation only of the first drive unit in the armature actuation range,

   (c) in a third range with high rotational speeds, the drive units are operated in one of the following modes:

   (ca) dual drive with both drive units as motors,

(cb) operation only of the second drive unit in the field weakening range at up to 300% of the rated rotational speed,

(cc) operation only of the first drive unit in the field weakening range at up to 150% of the rated rotational speed,

wherein the average rotational speeds are lower than the high rotational speeds and higher than the low rotational speeds.

2. Drive system (1) according to Claim 1, **characterized in that** the drive units (15, 42) are controlled in accordance with master rotational axis values by means of inverters (17) that follow a determined setpoint value.

3. Drive system (1) according to Claim 1 or 2, **characterized in that** the synchronization system (11) is configured as a software module, wherein the control of the conveying, extruding, pushing or pulling device, centre winder or synchronism application (2) of at least one drive unit (15, 42) is performed via a bus system (19, 20).

4. Drive system (1) according to any one of the preceding claims, **characterized in that** peripheral devices, in particular feed, unwinding, dancer, winding, cutting, laying and jig motion devices, are synchronized with and linked in terms of energy to the drive units (15, 42).

5. Drive system (1) according to any one of the preceding claims, **characterized in that** the transmission stage (9) is driven by means of a toothed belt or toothed chain (10), is mounted at the output side, and is configured as a planetary transmission (14).

6. Drive system (1) according to any one of the preceding claims, **characterized in that** the drive units (15, 42) have electric motors (16), in particular three-phase synchronous servomotors, synchronous reluctance motors, three-phase asynchronous servomotors, three-phase asynchronous motors or DC motors.

7. Drive system (1) according to any one of the preceding claims, **characterized in that** the mechanical power paths are configured with different speed ratios, preferably in each case with speed ratios that differ by a factor of 2.0.

8. Drive system (1) according to any one of the preceding claims, **characterized in that** at least one or all mechanical power paths of a drive train can be selectively mechanically and/or electrically immobilized in both directions of rotation.

9. Drive system (1) according to any one of the preceding claims, **characterized in that** at least one output shaft of a drive unit has a flywheel for damping torque shocks and/or for reducing the idle torque, wherein the flywheel is configured as a fan impeller with increased moment of inertia.

10. Drive system (1) according to any one of the preceding claims, **characterized in that**, for the synchronization of at least two drive units (15, 42) by means of a torque compensation control regime, an auxiliary device (44) is provided in which a reference value preparation means (22) specifies a position setpoint value signal and/or a rotational speed setpoint value signal for a rotational speed controller (24) of the first drive unit (15, 42), and the same rotational speed setpoint value (45) is also fed, as a rotational speed setpoint value (45) with a weighting adapted to the transmission speed ratio, to the second drive unit (42, 15).

11. Method for driving a drive system for conveying, extruding, pushing or pulling devices, synchronism applications or centre winders (2) with at least one power-split drive train (8), wherein the power split is realized by means of a transmission stage (9) in the drive train (8), wherein the drive train (8) has a first and a second drive unit (15, 42) that are coupled by means of an electronic synchronization system (11), wherein the second drive unit (42; 15) is connected with a higher transmission speed ratio than the first drive unit (15; 42),

wherein a time-dependent, travel-dependent and/or angle-dependent and/or rotational-speed-dependent and/or acceleration-dependent and/or deceleration-dependent and/or torque-dependent control regime of the drive units (15, 42) is configured to control a synchronous acceleration or braking of the first and/or second drive unit (15, 42) in a manner dependent on a linearly or hyperbolically rising power characteristic curve or a constant-power curve (32); wherein

all drive units are linked in terms of energy via an intermediate voltage circuit (35) and can operate individually and/or jointly in motor and/or generator mode,

**characterized**

**in that** the energy compensation is performed in the intermediate voltage circuit (35) provided for the purpose with an integrated brake chopper and brake resistance,
**in that** the drive units have electric motors (16) that are operated at least intermittently individually and/or jointly in the field weakening range,
**in that** the rotational speed/torque characteristic curve of the drive system is divided into at least three ranges, and in that,

(a) in a first range with low rotational speeds, the drive units are operated in one of the following modes:

(aa) drive of one drive unit as a motor and of the other drive unit as a generator,
(ab) operation only of the first drive unit in the armature actuation range,
(ac) operation only of the second drive unit in the armature actuation range,

(b) in a second range with medium rotational speeds, the drive units are operated in one of the following modes:

(ba) drive of one drive unit as a motor and of the other drive unit as a generator,
(bb) operation only of the second drive unit in the field weakening range at up to 150% of the rated rotational speed,
(bc) operation only of the first drive unit in the armature actuation range,

(c) in a third range with high rotational speeds, the drive units are operated in one of the following modes:

(ca) dual drive with both drive units as motors,
(cb) operation only of the second drive unit in the field weakening range at up to 300% of the rated rotational speed,
(cc) operation only of the first drive unit in the field weakening range at up to 150% of the rated rotational speed,

wherein the average rotational speeds are lower than the high rotational speeds and higher than the low rotational speeds.

12. Method according to Claim 11,
**characterized**
**in that** the control of the drive units (15, 42) is performed in accordance with master rotational axis values, wherein the control follows a determined setpoint value.

13. Method according to Claim 11 or 12,
**characterized**
**in that** peripheral devices, in particular feed, unwinding, dancer, winding, cutting, laying and jig motion devices, are synchronized with and linked in terms of energy to the drive system (1).

14. Method according to any one of Claims 11 to 13, wherein the transmission speed ratio of the second drive unit is higher than the transmission speed ratio of the first drive unit, in the range from 1.5 times to 3 times.

**15.** Method according to Claim 14, wherein the transmission speed ratio of the second drive unit is 2 times higher than the transmission speed ratio of the first drive unit.

**Revendications**

**1.** Système d'entraînement (1) destiné à des dispositifs de transport, d'extrusion, de poussée, de traction, à des enrouleurs axiaux centraux (2) et à des applications de synchronisation, comprenant au moins une chaîne cinématique à dérivation de puissance (8), la dérivation de puissance étant réalisée par d'un étage de transmission (9) dans la chaîne cinématique (8), la chaîne cinématique (8) présentant une première et une deuxième unité d'entraînement (15, 42) qui sont couplées par l'intermédiaire d'un système de synchronisation électronique (11), la deuxième unité d'entraînement (42 ; 15) étant raccordée avec un rapport de transmission plus élevé que la première unité d'entraînement (15 ; 42),

dans lequel une commande en fonction du temps, du trajet et/ou de l'angle et/ou de la vitesse de rotation et/ou de l'accélération et/ou du ralentissement et/ou du couple des unités d'entraînement (15, 42) est configurée de telle sorte qu'elle régule en fonction d'une courbe caractéristique de puissance ascendante linéaire ou hyperbolique ou d'une courbe de puissance constante (32) une accélération ou un freinage synchrone de la première et/ou de la deuxième unité d'entraînement (15, 42) ; et

toutes les unités d'entraînement étant reliées énergétiquement par un circuit intermédiaire de tension (35) et pouvant fonctionner individuellement et/ou ensemble en mode moteur et/ou en mode générateur,
**caractérisé**
**en ce que** l'équilibrage énergétique a lieu dans le circuit intermédiaire de tension (35) prévu à cet effet avec un hacheur de freinage et une résistance de freinage intégrés,
**en ce que** les unités d'entraînement présentent des moteurs électriques (16) qui sont actionnés au moins temporairement individuellement et/ou ensemble dans la plage de désexcitation,
**en ce que** la courbe caractéristique de vitesse de rotation/couple du système d'entraînement est divisée en au moins trois plages, et en ce que

(a) dans une première plage avec des vitesses de rotation faibles, les unités d'entraînement sont actionnées dans l'un des modes suivants :

(aa) entraînement d'une unité d'entraînement comme moteur et de l'autre unité d'entraînement comme générateur,
(ab) fonctionnement uniquement de la première unité d'entraînement dans la plage de réglage d'armature,
(ac) fonctionnement uniquement de la deuxième unité d'entraînement dans la plage de réglage d'armature,

(b) dans une deuxième plage avec des vitesses de rotation moyennes, les unités d'entraînement sont actionnées dans l'un des modes suivants :

(ba) entraînement d'une unité d'entraînement comme moteur et de l'autre unité d'entraînement comme générateur,
(bb) fonctionnement uniquement de la deuxième unité d'entraînement dans la plage de désexcitation avec jusqu'à 150 % de la vitesse de rotation nominale,
(bc) fonctionnement uniquement de la première unité d'entraînement dans la plage de réglage d'armature,

(c) dans une troisième plage avec des vitesses de rotation élevées, les unités d'entraînement sont actionnées dans l'un des modes suivants :

(ca) entraînement double avec les deux unités d'entraînement comme moteur,
(cb) fonctionnement uniquement de la deuxième unité d'entraînement dans la plage de désexcitation avec jusqu'à 300 % de la vitesse de rotation nominale,
(cc) fonctionnement uniquement de la première unité d'entraînement dans la plage de désexcitation avec jusqu'à 150 % de la vitesse de rotation nominale,

les vitesses de rotation moyennes étant inférieures aux vitesses de rotation élevées et supérieures aux vitesses de rotation faibles.

2. Système d'entraînement (1) selon la revendication 1, **caractérisé en ce que** les unités d'entraînement (15, 42) sont commandées selon des valeurs d'axe de rotation directeur par l'intermédiaire d'onduleurs (17) qui poursuivent une valeur de consigne déterminée.

3. Système d'entraînement (1) selon la revendication 1 ou 2, **caractérisé en ce que** le système de synchronisation (11) est configuré comme un module logiciel, la commande du dispositif de transport, d'extrusion, de poussée, de traction, de l'enrouleur axial central ou de l'application de synchronisation (2) d'au moins une unité d'entraînement (15, 42) étant effectuée par l'intermédiaire d'un système de bus (19, 20) .

4. Système d'entraînement (1) selon l'une quelconque des revendications précédentes, **caractérisé en ce que** des dispositifs périphériques, en particulier des dispositifs d'alimentation, de déroulement, de tension, d'enroulement, de coupe, de pose et de va-et-vient, sont reliés de manière synchronisée et énergétique aux unités d'entraînement (15, 42).

5. Système d'entraînement (1) selon l'une quelconque des revendications précédentes, **caractérisé en ce que** l'étage de transmission (9) est entraîné par une courroie crantée ou une chaîne à dents (10), est montée côté sortie et est configurée sous forme d'engrenage planétaire (14).

6. Système d'entraînement (1) selon l'une quelconque des revendications précédentes, **caractérisé en ce que** les unités d'entraînement (15, 42) présentent des moteurs électriques (16), en particulier des servomoteurs synchrones triphasés, des moteurs à reluctance synchrones, des servomoteurs asynchrones triphasés, des moteurs asynchrones triphasés ou des moteurs à courant continu.

7. Système d'entraînement (1) selon l'une quelconque des revendications précédentes, **caractérisé en ce que** les chemins de puissance mécaniques sont conçus avec différents rapports de transmission, de préférence respectivement avec des rapports de transmission ayant un écart du facteur 2,0.

8. Système d'entraînement (1) selon l'une quelconque des revendications précédentes, **caractérisé en ce qu'**au moins un ou la totalité des chemins de puissance d'une chaîne cinématique peut être fixé(e) sélectivement de manière mécanique et/ou électrique dans les deux sens de rotation.

9. Système d'entraînement (1) selon l'une quelconque des revendications précédentes, **caractérisé en ce qu'**au moins un arbre de sortie d'une unité d'entraînement présente un volant pour atténuer des pointes de couple et/ou pour réduire le couple de marche à vide, le volant étant réalisé sous forme de roue de ventilateur à moment d'inertie augmenté.

10. Système d'entraînement (1) selon l'une quelconque des revendications précédentes, **caractérisé en ce que** pour la synchronisation d'au moins deux unités d'entraînement (15, 42) au moyen d'une régulation d'équilibrage de couple, un dispositif auxiliaire (44) est prévu, dans lequel un traitement de conductance (22) spécifie un signal de valeur de consigne de position et/ou un signal de valeur de consigne de vitesse de rotation à l'intention d'un régulateur de vitesse de rotation (24) de la première unité d'entraînement (15, 42), et la même valeur de consigne de vitesse de rotation (45) est également fournie à la deuxième unité d'entraînement (42, 15) sous forme de valeur de consigne de vitesse de rotation (45) avec une pondération adaptée au rapport de transmission.

11. Procédé d'entraînement d'un système d'entraînement destiné à des dispositifs de transport, d'extrusion, de poussée, de traction, des applications de synchronisation ou à des enrouleurs axiaux centraux (2), comprenant au moins une chaîne cinématique (8) à dérivation de puissance, la dérivation de puissance étant réalisé par l'intermédiaire d'un étage de transmission (9) dans la chaîne cinématique (8), la chaîne cinématique (8) présentant une première et une deuxième unité d'entraînement (15, 42) qui sont couplées par l'intermédiaire d'un système de synchronisation électronique (11), la deuxième unité d'entraînement (42 ; 15) étant raccordée avec un rapport de transmission plus élevé que la première unité d'entraînement (15 ; 42),

dans lequel une commande en fonction du temps, du trajet et/ou de l'angle et/ou de la vitesse de rotation et/ou de l'accélération et/ou du ralentissement et/ou du couple des unités d'entraînement (15, 42) est configurée de telle sorte qu'elle régule en fonction d'une courbe caractéristique de puissance ascendante linéaire ou hyperbolique ou d'une courbe de puissance constante (32) une accélération ou un freinage synchrone de la première et/ou de la deuxième unité d'entraînement (15, 42) ; dans lequel

toutes les unités d'entraînement sont reliées énergétiquement par un circuit intermédiaire de tension (35) et peuvent fonctionner individuellement et/ou ensemble en mode moteur et/ou en mode générateur,

**caractérisé**

**en ce que** l'équilibrage énergétique a lieu dans le circuit intermédiaire de tension (35) prévu à cet effet avec un hacheur de freinage et une résistance de freinage intégrés,

**en ce que** les unités d'entraînement présentent des moteurs électriques (16) qui sont actionnés au moins temporairement individuellement et/ou ensemble dans la plage de désexcitation,

**en ce que** la courbe caractéristique de vitesse de rotation/couple du système d'entraînement est divisée en au moins trois plages, et en ce que

(a) dans une première plage avec des vitesses de rotation faibles, les unités d'entraînement sont actionnées dans l'un des modes suivants :

(aa) entraînement d'une unité d'entraînement comme moteur et de l'autre unité d'entraînement comme générateur,
(ab) fonctionnement uniquement de la première unité d'entraînement dans la plage de réglage d'armature,
(ac) fonctionnement uniquement de la deuxième unité d'entraînement dans la plage de réglage d'armature,

(b) dans une deuxième plage avec des vitesses de rotation moyennes, les unités d'entraînement sont actionnées dans l'un des modes suivants :

(ba) entraînement d'une unité d'entraînement comme moteur et de l'autre unité d'entraînement comme générateur,
(bb) fonctionnement uniquement de la deuxième unité d'entraînement dans la plage de désexcitation avec jusqu'à 150 % de la vitesse de rotation nominale,
(bc) fonctionnement uniquement de la première unité d'entraînement dans la plage de réglage d'armature,

(c) dans une troisième plage avec des vitesses de rotation élevées, les unités d'entraînement sont actionnées dans l'un des modes suivants :

(ca) entraînement double avec les deux unités d'entraînement comme moteur,
(cb) fonctionnement uniquement de la deuxième unité d'entraînement dans la plage de désexcitation avec jusqu'à 300 % de la vitesse de rotation nominale,
(cc) fonctionnement uniquement de la première unité d'entraînement dans la plage de désexcitation avec jusqu'à 150 % de la vitesse de rotation nominale,

les vitesses de rotation moyennes étant inférieures aux vitesses de rotation élevées et supérieures aux vitesses de rotation faibles.

**12.** Procédé selon la revendication 11, **caractérisé en ce que** la commande des unités d'entraînement (15, 42) est effectuée selon des valeurs d'axe de rotation directeur, la commande poursuivant une valeur de consigne déterminée.

**13.** Procédé selon la revendication 11 ou 12, **caractérisé en ce que** des dispositifs périphériques, en particulier des dispositifs d'alimentation, de déroulement, de tension, d'enroulement, de coupe, de pose et de va-et-vient, sont reliés de manière synchronisée et énergétique au système d'entraînement (1) .

**14.** Procédé selon l'une quelconque des revendications 11 à 13, dans lequel le rapport de transmission de la deuxième unité d'entraînement est supérieur au rapport de transmission de la première unité d'entraînement dans la plage de 1,5 fois à 3 fois.

**15.** Procédé selon la revendication 14, dans lequel le rapport de transmission de la deuxième unité d'entraînement est 2 fois supérieur au rapport de transmission de la première unité d'entraînement.

Fig. 1

EP 3 102 988 B1

EP 3 102 988 B1

**Fig. 2**

**Fig. 3**

EP 3 102 988 B1

23

# Fig. 4

Fig. 5

EP 3 102 988 B1

# Fig. 6

# Fig. 7

Fig. 8

EP 3 102 988 B1

# Fig. 9

Fig. 10

66

M,P

P

M

n

M,P

P

M

n

M,P

M

P

n

M,P

P   M

n

M,P

P

M

n

EP 3 102 988 B1

# Fig. 11

$$\Sigma|P| < \ ; \ \Sigma|T| < \ ; \ \Sigma|n| < \quad \longrightarrow$$

$$|P| = \ ; \ |T| > \ ; \ |n| > \quad \vee$$

| Ankerstell-bereich Motor 1 66 ... 100% | | Ankerstell-bereich Motor 2 66 ... 100% | | Ankerstell-bereich Motor 3 66 ... 100% |
|---|---|---|---|---|
| $\text{n Abtrieb} = \dfrac{\text{n Motor 1}}{\text{i1}}$ | − | $\dfrac{(1-\text{i1}) \times \text{n Motor 2}}{\text{i1} \times \text{iR1} \times \text{i2}}$ | + | $\dfrac{(1-\text{i1}) \times (1-\text{i2}) \times \text{n Motor 3}}{\text{i1} \times \text{iR1} \times \text{i2} \times \text{iR2} \times \text{i3}}$ |
| Feldschwäch-bereich Motor 1 100 ... 133% | | Feldschwäch-bereich Motor 2 100 ... 133% | | Feldschwäch-bereich Motor 3 100 ... 133% |
| $\text{n Abtrieb} = \dfrac{\text{n Motor 1}}{\text{i1}}$ | − | $\dfrac{(1-\text{i1}) \times \text{n Motor 2}}{\text{i1} \times \text{iR1} \times \text{i2}}$ | + | $\dfrac{(1-\text{i1}) \times (1-\text{i2}) \times \text{n Motor 3}}{\text{i1} \times \text{iR1} \times \text{i2} \times \text{iR2} \times \text{i3}}$ |
| Feldschwäch-bereich Motor 1 133 ... 166% | | Feldschwäch-bereich Motor 2 133 ... 166% | | Feldschwäch-bereich Motor 3 133 ... 166% |
| $\text{n Abtrieb} = \dfrac{\text{n Motor 1}}{\text{i1}}$ | − | $\dfrac{(1-\text{i1}) \times \text{n Motor 2}}{\text{i1} \times \text{iR1} \times \text{i2}}$ | + | $\dfrac{(1-\text{i1}) \times (1-\text{i2}) \times \text{n Motor 3}}{\text{i1} \times \text{iR1} \times \text{i2} \times \text{iR2} \times \text{i3}}$ |
| Feldschwäch-bereich Motor 1 166 ... 200% | | Feldschwäch-bereich Motor 2 166 ... 200% | | Feldschwäch-bereich Motor 3 166 ... 200% |
| $\text{n Abtrieb} = \dfrac{\text{n Motor 1}}{\text{i1}}$ | − | $\dfrac{(1-\text{i1}) \times \text{n Motor 2}}{\text{i1} \times \text{iR1} \times \text{i2}}$ | + | $\dfrac{(1-\text{i1}) \times (1-\text{i2}) \times \text{n Motor 3}}{\text{i1} \times \text{iR1} \times \text{i2} \times \text{iR2} \times \text{i3}}$ |

Fig. 12

EP 3 102 988 B1

Wirkungs-grad μ

100 %

75%-15%   75%+15%

58   60

μ (n) = 0,9 x Nenndrehzahl

μ (n) = 0,75 x Nenndrehzahl

μ (n) = 0,6 x Nenndrehzahl

61   59

μ (n)

25 %   60 %   90 %   100 %

Last

Fig. 13

Wirkungs-grad µ

100 %

75%-15%    75%+15%

62    64

µ (n) = 0,9 x Nenndrehzahl

µ (n) = 0,75 x Nenndrehzahl

µ (n) = 0,6 x Nenndrehzahl

65    63

µ (n)

25 %    60 %    90 % 100 %    Last

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2456063 A2
- US 2006205553 A1
- EP 1953053 A1